(19) **Europäisches Patentamt**
**European Patent Office**
**Office européen des brevets**

(11) **EP 4 007 014 A1**

(12) **EUROPEAN PATENT APPLICATION**
published in accordance with Art. 153(4) EPC

(43) Date of publication:
**01.06.2022 Bulletin 2022/22**

(21) Application number: **20847957.6**

(22) Date of filing: **30.07.2020**

(51) International Patent Classification (IPC):
**H01M 4/525** $^{(2010.01)}$    **C01G 53/00** $^{(2006.01)}$
**H01M 4/36** $^{(2006.01)}$    **H01M 4/505** $^{(2010.01)}$
**H01M 4/62** $^{(2006.01)}$    **H01M 10/052** $^{(2010.01)}$
**H01M 10/0562** $^{(2010.01)}$

(52) Cooperative Patent Classification (CPC):
**C01G 53/00; H01M 4/36; H01M 4/505;**
**H01M 4/525; H01M 4/62; H01M 10/052;**
**H01M 10/0562;** Y02E 60/10

(86) International application number:
**PCT/JP2020/029327**

(87) International publication number:
**WO 2021/020531 (04.02.2021 Gazette 2021/05)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **31.07.2019 JP 2019141366**

(71) Applicant: **NICHIA CORPORATION**
**Tokushima 774-8601 (JP)**

(72) Inventors:
• **MIYAMOTO, Yoshiteru**
**Anan-shi, Tokushima 774-8601 (JP)**

• **SHIRAISHI, Taiga**
**Anan-shi, Tokushima 774-8601 (JP)**
• **KAWAI, Kenta**
**Anan-shi, Tokushima 774-8601 (JP)**
• **YOSHIDA, Yasuhiro**
**Anan-shi, Tokushima 774-8601 (JP)**
• **MURAYAMA, Masahiro**
**Anan-shi, Tokushima 774-8601 (JP)**

(74) Representative: **Vossius & Partner**
**Patentanwälte Rechtsanwälte mbB**
**Siebertstraße 3**
**81675 München (DE)**

(54) **METHOD FOR PRODUCING NICKEL COBALT COMPOSITE OXIDE, NICKEL COBALT COMPOSITE OXIDE, POSITIVE ELECTRODE ACTIVE MATERIAL, POSITIVE ELECTRODE FOR ALL-SOLID LITHIUM-ION SECONDARY BATTERY, AND ALL-SOLID LITHIUM-ION SECONDARY BATTERY**

(57) Provided is a positive electrode for an all-solid-state lithium ion secondary battery which can reduce the internal resistance of the all-solid-state lithium ion secondary battery. The positive electrode includes an active material layer containing a positive electrode active material and a solid electrolyte material. The positive electrode active material contains secondary particles comprising an aggregate of a plurality of primary particles containing a lithium transition metal composite oxide. A smoothness of the secondary particles is more than 0.73, and a degree of circularity of the secondary particles is more than 0.83.

EP 4 007 014 A1

**Description**

TECHNICAL FIELD

The present disclosure relates to a method for producing a nickel cobalt composite oxide, a nickel cobalt composite oxide, a positive electrode active material, a positive electrode for an all-solid-state lithium ion secondary battery and an all-solid-state lithium ion secondary battery.

BACKGROUND ART

From the viewpoint of safety, all-solid-state lithium ion secondary batteries using an inorganic solid electrolyte instead of a flammable non-aqueous electrolytic solution have been studied. All-solid-state lithium ion secondary batteries are required to improve in output characteristics. For example, WO 2007/004590 proposes a technique of forming a lithium ion conductive oxide layer on the surface of a positive electrode active material, which is considered to be excellent in high power characteristics.

On the other hand, as a positive electrode active material, a technique of narrowing the particle size distribution of secondary particles formed in a substantially spherical shape by aggregation of primary particles has been proposed, which is considered to be able to increase the capacity of a battery (see WO 2013/183711 for example). Furthermore, a technique of producing a spherical nickel cobalt aluminum hydroxide precursor material by a coprecipitation method has been proposed, which is considered to improve cycle characteristics (see WO 2016/180288 for example).

SUMMARY OF INVENTION

TECHNICAL PROBLEMS

Lithium ion secondary batteries are required to further improve battery characteristics. In addition, it is required to improve characteristics of positive electrode active materials used in lithium ion secondary batteries and precursors thereof.

SOLUTIONS TO PROBLEMS

A first aspect of the present disclosure is a method for producing a nickel cobalt composite oxide. The method includes preparing a first solution containing nickel ions and cobalt ions, preparing a second solution containing a complex ion forming factor, preparing a liquid medium having a pH in a range of from 10 to 13.5, supplying the first solution and the second solution separately and simultaneously to the liquid medium, and supplying a polymer containing a constituent unit derived from (meth)acrylic acid to the liquid medium, to obtain a reaction solution whose pH is maintained in a range of from 10 to 13.5, obtaining a composite hydroxide containing nickel and cobalt from the reaction solution, and subjecting the composite hydroxide to a heat treatment to obtain secondary particles comprising an aggregate of a plurality of primary particles containing a composite oxide containing nickel and cobalt. A smoothness of the secondary particles constituting the nickel cobalt composite oxide may be more than 0.74.

A second aspect of the present disclosure is a nickel cobalt composite oxide comprising secondary particles comprising an aggregate of a plurality of primary particles containing a composite oxide containing nickel and cobalt. A smoothness of the secondary particles constituting the nickel cobalt composite oxide is more than 0.74.

A third aspect of the present disclosure is a positive electrode active material having a layered structure and comprising secondary particles comprising an aggregate of a plurality of primary particles containing a lithium transition metal composite oxide containing lithium, nickel and cobalt. A smoothness of the secondary particles constituting the positive electrode active material is more than 0.73, and a degree of circularity of the secondary particles is more than 0.83.

A fourth aspect of the present disclosure is a positive electrode for an all-solid-state lithium ion secondary battery, comprising a positive electrode active material. The positive electrode active material contains secondary particles comprising an aggregate of a plurality of primary particles containing a lithium transition metal composite oxide. The secondary particles have a smoothness of more than 0.73 and a degree of circularity of more than 0.83.

A fifth aspect of the present disclosure is an all-solid-state lithium ion secondary battery including the positive electrode, a negative electrode and a solid electrolyte layer.

ADVANTAGEOUS EFFECTS OF INVENTION

According to one aspect of the present disclosure, it is possible to provide a positive electrode capable of reducing internal resistance of an all-solid-state lithium ion secondary battery.

**EP 4 007 014 A1**

BRIEF DESCRIPTION OF DRAWINGS

Fig. 1 is an exemplary equivalent circuit diagram of an all-solid-state secondary battery.

Fig. 2A is an exemplary scanning electron microscope (SEM) image of a nickel cobalt composite oxide according to Example 3.

Fig. 2B is an SEM image obtained by further enlarging Fig. 2A.

Fig. 3A is an exemplary SEM image of a nickel cobalt composite oxide according to Example 7.

Fig. 3B is an SEM image obtained by further enlarging Fig. 3A.

Fig. 4A is an exemplary SEM image of a nickel cobalt composite oxide according to Comparative Example 2.

Fig. 4B is an SEM image obtained by further enlarging Fig. 4A.

DESCRIPTION OF EMBODIMENTS

In the present specification, the term "step" includes not only an independent step but also a step that is not clearly distinguishable from other steps, as long as the intended purpose of the step is achieved. When a plurality of substances corresponding to each component are present in a composition, the content of each component in the composition means the total amount of the plurality of substances present in the composition unless otherwise specified. Hereinafter, embodiments of the present disclosure will be described in detail. However, the following embodiments exemplify a method for producing a nickel cobalt composite metal oxide, a nickel cobalt composite oxide, a positive electrode active material, a positive electrode for an all-solid-state lithium ion secondary battery and an all-solid-state lithium ion secondary battery for embodying the technical idea of the present disclosure, and the present disclosure is not limited to the following positive electrode active material for an all-solid-state lithium ion secondary battery, positive electrode and all-solid-state lithium ion secondary battery.

Positive electrode for all-solid-state lithium ion secondary battery

A positive electrode for an all-solid-state lithium ion secondary battery (hereinafter, also simply referred to as a positive electrode) includes an active material layer containing a positive electrode active material and a solid electrolyte material. The positive electrode active material contained in the active material layer contains secondary particles comprising an aggregate of a plurality of primary particles containing a lithium transition metal composite oxide. The secondary particles constituting the positive electrode active material have a smoothness of more than 0.73 and a degree of circularity of more than 0.83.

Because the secondary particles constituting the positive electrode active material have specific shapes specified by the smoothness and the degree of circularity, for example, the area where the secondary particle and the solid electrolyte material are in contact with each other increases, and thus it is considered that the resistance at the interface between the secondary particles and the solid electrolyte reduces. In addition, for the purpose of improving cycle characteristics, when an attached matter containing a specific element is attached to the surfaces of the secondary particles, the compound to be attached easily and evenly attaches, and resistance components may be reduced. Further, cracking of the secondary particles due to pressure molding in forming the positive electrode may be reduced. This may be considered, for example, because the pressure of the pressure molding is uniformly applied to the entire particle. Positive electrode active material

The positive electrode active material comprises secondary particles comprising an aggregate of a plurality of primary particles containing a lithium transition metal composite oxide. A smoothness of the secondary particles constituting the positive electrode active material may be more than 0.73, and a degree of circularity of the secondary particles may be more than 0.83. Secondary particles may be formed by aggregation of, for example, no less than 50 of primary particles. The positive electrode active material may be produced by a method for producing a positive electrode active material described later.

The smoothness of the secondary particles is, for example, more than 0.73, preferably no less than 0.80, and more preferably no less than 0.83. The upper limit of the smoothness is 1. The smoothness is an index representing degree of unevenness in the outline shape of the secondary particle. As the shape is smoother, the smoothness becomes closer to 1, and as the degree of unevenness is larger, the smoothness becomes closer to 0. The smoothness is obtained as follows. With respect to the outline shape of a target secondary particle, an approximate ellipse having the same area as the outline shape of the target secondary particle is obtained using a fitting function of image processing software. From the major axis a and the minor axis b of the approximate ellipse, the length of the entire perimeter L of the approximate ellipse is calculated using the Gauss-Kummer formula. When the length of the entire perimeter of the outline shape of the secondary particle is $L_{op}$ and the length of the entire perimeter of the approximate ellipse is L, the smoothness is a ratio ($L/L_{op}$) of the length of the entire perimeter (L) of the approximate ellipse to the length of the entire perimeter ($L_{op}$) of the outline of the secondary particle image. The magnification of the image used to calculate the smoothness of the secondary particles may be appropriately selected according to the particle diameter of the secondary particle. The magnification may be, for example, from 1000 times to 10,000 times, preferably from 1000 times to 6000 times, and more preferably from 2000 times to 6000 times.

Specifically, with a scanning electron microscope (SEM), a reflection electron image (magnification; 4000 times) is taken, and for 20 to 40 secondary particles with recognizable outlines, each approximate ellipse is obtained to obtain the major axis a and the minor axis b. The length of the entire perimeter $L_{op}$ of the outline shape is also measured. The length of the entire perimeter L of the approximate ellipse is calculated from the major axis a and the minor axis b based on the following approximate expression, to obtain a ratio ($L/L_{op}$) for the individual secondary particles, and the smoothness of the secondary particles is calculated as an arithmetic average value thereof. The wording secondary particles with recognizable outlines means that the entire outline of the secondary particle may be traced on the image.

[Mathematical Formula 1]

$$L = \pi(a + b)\left\{1 + \left(\frac{1}{2}\right)^2 h^2 + \left(\frac{1}{2 \cdot 4}\right)^2 h^4 + \left(\frac{1 \cdot 3}{2 \cdot 4 \cdot 6}\right)^2 h^6\right\}$$

wherein $h = \dfrac{a - b}{a + b}$

The degree of circularity of the secondary particles is, for example, more than 0.83, preferably no less than 0.86, and more preferably no less than 0.90. The upper limit of the degree of circularity is 1. The degree of circularity is an index representing circularity of the outline shape of the secondary particle. The degree of circularity becomes closer to 1 as the shape is closer to a circle. The degree of circularity is defined, when the diameter of a circle having the same area as the particle image area in the outline shape of the secondary particle is defined as a circle equivalent diameter, as a ratio ($L_1/L_0$) of the length of the circumference ($L_1$) calculated from the circle equivalent diameter to the length of the entire perimeter ($L_0$) of the outline shape of the secondary particle.

Specifically, with a dry particle image analyzer (Morphologi G3S: Malvern Instruments Ltd.; magnification; 20 times), the individual ratios ($L_1/L_0$) were calculated for about 10,000 particles, and the degree of circularity of the secondary particles was obtained as the arithmetic average value thereof.

The particle size distribution of the secondary particles is, for example, less than 0.61, preferably no more than 0.60, more preferably no more than 0.58, further preferably no more than 0.54, and particularly preferably no more than 0.50. The particle size distribution is an index indicating variation in the particle diameter of individual secondary particles in a secondary particle group, and the smaller the value is, the smaller the variation in the particle diameter is. When the particle size distribution of the secondary particles is within the above range, an attached matter is likely to be uniformly attached when another element is attached to the surface of the secondary particles. In the present specification, the particle size distribution is defined as follows. When the particle diameters corresponding to the cumulative 10%, 50% and 90% from the small diameter side in volume-based cumulative particle size distribution are defined as 10% particle diameter $D_{10}$, 50% particle diameter $D_{50}$ and 90% particle diameter $D_{90}$, respectively, a value obtained by dividing the difference between $D_{90}$ and $D_{10}$ by $D_{50}$ is defined as the particle size distribution in the present specification. That is, the particle size distribution of the secondary particles is defined by the following formula.

Particle size distribution = ($D_{90}$ - $D_{10}$)/$D_{50}$

Here, the volume-based cumulative particle size distribution is measured under wet conditions with a laser diffraction particle size distribution analyzer.

The volume average particle diameter of the secondary particles is, for example, from 1 $\mu$m to 30 $\mu$m, preferably no less than 2 $\mu$m, more preferably no less than 3 $\mu$m, and preferably no more than 12 $\mu$m, and more preferably no more than 8 $\mu$m. When the volume average particle diameter of the secondary particles is within the above range, the fluidity is good, and output may further improve when the secondary battery is formed. Here, the volume average particle diameter is the 50% particle diameter $D_{50}$ corresponding to the cumulative 50% from the small diameter side in a volume-based cumulative particle size distribution.

The secondary particles may be formed by aggregation of a plurality of primary particles. The average particle diameter $D_{SEM}$ of the primary particles based on electron microscope observation is, for example, from 0.1 $\mu$m to 1.5 $\mu$m, preferably no less than 0.12 $\mu$m, and more preferably no less than 0.15 $\mu$m. The average particle diameter $D_{SEM}$ of the primary particles based on electron microscope observation is preferably no more than 1.2 $\mu$m, and more preferably

no more than 1.0 μm. When the average particle diameter of the primary particles based on electron microscope observation is within the above range, the output may improve when a battery is formed. Here, the average particle diameter of the primary particles based on electron microscope observation is measured as follows. The primary particles constituting the secondary particles are observed with a scanning electron microscope (SEM) at a magnification ranging from 1000 to 15000 according to the particle diameter. 50 primary particles with recognizable outlines are selected, a sphere equivalent diameter is calculated from the outlines of the selected primary particles using image processing software, and an average particle diameter based on electron microscope observation of the primary particles is obtained as an arithmetic average value of the obtained sphere equivalent diameters. In one aspect, the primary particles may have particles that have an average particle diameter smaller than that of the primary particles and are attached to the surface of the primary particles. In one aspect, the primary particle may comprise or be an aggregate of particles having an average particle diameter smaller than that of the primary particles. The average particle diameter of the particles having an average particle diameter smaller than that of the primary particles may be measured based on electron microscope observation in the same manner as described above. The wording primary particles with recognizable outlines means that the entire outline of the primary particle may be traced on the image.

The secondary particles may have a ratio $D_{50}/D_{SEM}$ of no less than 2.5 for example, wherein $D_{50}$ is the 50% particle diameter in volume-based cumulative particle size distribution, and $D_{SEM}$ is the average particle diameter based on electron microscope observation. The ratio $D_{50}/D_{SEM}$ is, for example, from 2.5 to 150, preferably no less than 5, and more preferably no less than 10. The ratio $D_{50}/D_{SEM}$ is preferably no more than 100, and more preferably no more than 50.

The lithium transition metal composite oxide contained in the primary particles constituting the secondary particles may contain, for example, nickel in the composition and may have a layered structure. The lithium transition metal composite oxide may contain at least lithium (Li) and a transition metal such as nickel (Ni), and may further contain at least one first metal element selected from the group consisting of aluminum (Al), cobalt (Co) and manganese (Mn). The lithium transition metal composite oxide contains lithium (Li), nickel (Ni), and cobalt (Co), and may further contain at least one of aluminum (Al) and manganese (Mn). The lithium transition metal composite oxide may further contain, in addition to these, at least one second metal element selected from the group consisting of magnesium (Mg), calcium (Ca), titanium (Ti), zirconium (Zr), niobium (Nb), tantalum (Ta), chromium (Cr), molybdenum (Mo), tungsten (W), iron (Fe), copper (Cu), silicon (Si), tin (Sn), bismuth (Bi), gallium (Ga), yttrium (Y), samarium (Sm), erbium (Er), cerium (Ce), neodymium (Nd), lanthanum (La), cadmium (Cd) and lutetium (Lu). The second metal element may be at least one selected from the group consisting of zirconium (Zr), titanium (Ti), magnesium (Mg), tantalum (Ta), niobium (Nb), molybdenum (Mo) and tungsten (W).

When the lithium transition metal composite oxide contains nickel, the ratio of the number of moles of nickel to the total number of moles of metal elements other than lithium is, for example, more than 0, and preferably no less than 0.33. The ratio of the number of moles of nickel to the total number of moles of metal elements other than lithium may be no less than 0.4 or no less than 0.55. The ratio of the number of moles of nickel to the total number of moles of metal elements other than lithium is, for example, less than 1, preferably no more than 0.95, and more preferably no more than 0.8. When the ratio of the number of moles of nickel is in the above-described range, it is possible to achieve both charge/discharge capacity at a high voltage and cycle characteristics in the all-solid-state lithium ion secondary battery (hereinafter, it is also simply referred to as an all-solid-state secondary battery).

When the lithium transition metal composite oxide contains cobalt, the ratio of the number of moles of cobalt to the total number of moles of metal elements other than lithium is, for example, more than 0, preferably no less than 0.02, more preferably no less than 0.05, further preferably no less than 0.1, and particularly preferably no less than 0.15. The ratio of the number of moles of cobalt to the total number of moles of metal elements other than lithium is, for example, less than 1, preferably no more than 0.6, and more preferably no more than 0.35. The ratio of the number of moles of cobalt to the total number of moles of metal elements other than lithium may be no more than 0.33, no more than 0.3, or no more than 0.25. When the ratio of the number of moles of cobalt is in the above-described range, a sufficient charge/discharge capacity at a high voltage may be achieved in the all-solid-state secondary battery.

When the lithium transition metal composite oxide contains at least one of manganese and aluminum, the ratio of the total number of moles of manganese and aluminum to the total number of moles of metal elements other than lithium is, for example, more than 0, preferably no less than 0.01, more preferably no less than 0.05, further preferably no less than 0.1, and particularly preferably no less than 0.15. The ratio of the total number of moles of manganese and aluminum to the total number of moles of metal elements other than lithium is, for example, no more than 0.6, and preferably no more than 0.35. The ratio of the total number of moles of manganese and aluminum to the total number of moles of metal elements other than lithium may be no more than 0.33, no more than 0.3, or no more than 0.25. When the ratio of the total number of moles of manganese and aluminum is within the above-mentioned range, it is possible to achieve both charge-discharge capacity and safety in the all-solid-state secondary battery.

In the lithium transition metal composite oxide, the ratio of the number of moles of lithium to the total number of moles of metals other than lithium is, for example, no less than 0.95, preferably no less than 1.0, more preferably no less than 1.03, and further preferably no less than 1.05. The ratio of the number of moles of lithium to the total number of moles of metals other than lithium is, for example, no more than 1.5, preferably no more than 1.3, more preferably no more than 1.25, and further preferably no more than 1.2. When the ratio of the number of moles of lithium is no less than 0.95, interface resistance generated at the interface between the positive electrode surface and the solid electrolyte in the all-solid-state secondary battery using the positive electrode active material containing the obtained lithium transition metal composite oxide is suppressed, and thus output of the all-solid-state secondary battery tends to improve. When the ratio of the number of moles of lithium is no more than 1.5, initial discharge capacity tends to improve when the positive electrode active material is used for the positive electrode of the all-solid-state secondary battery.

When the lithium transition metal composite oxide contains cobalt and manganese in addition to nickel, the ratio of the number of moles of nickel, cobalt and manganese is, for example, nickel: cobalt: manganese = (0.33 to 0.95) : (0.02 to 0.35) : (0.01 to 0.35) and preferably (0.33 to 0.8) : (0.05 to 0.35) : (0.05 to 0.35). When the lithium transition metal composite oxide contains cobalt, manganese and aluminum in addition to nickel, the ratio of the number of moles of nickel, cobalt and (manganese + aluminum) is, for example, nickel: cobalt: (manganese + aluminum) = (0.33 to 0.95) : (0.02 to 0.35) : (0.01 to 0.35) and preferably (0.33 to 0.8) : (0.05 to 0.35) : (0.05 to 0.35).

When the lithium transition metal composite oxide contains at least one second metal element, the ratio of the total number of moles of the second metal element to the total number of moles of metal elements other than lithium is, for example, more than 0, preferably no less than 0.001, and more preferably no less than 0.003. The ratio of the total number of moles of the second metal element to the total number of moles of metal elements other than lithium is, for example, no more than 0.02, preferably no more than 0.015, and more preferably no more than 0.01.

When the lithium transition metal composite oxide is represented as a composition, a lithium transition metal composite oxide represented by the following Formula (2) may be given for example. The lithium transition metal composite oxide may have a layered structure or a hexagonal crystal structure.

$$Li_pNi_xCo_yM^1_zM^2_wO_{2+\beta} \qquad (2)$$

Here, $p$, $x$, $y$, $z$, $w$ and $\beta$ satisfy $1.0 \leq p \leq 1.3$, $0 \leq x \leq 1$, $0 \leq y \leq 1$, $0 \leq z \leq 1$, $0 \leq w \leq 0.02$, $x + y + z + w = 1$ and $-0.1 \leq \beta \leq 0.1$. $x$, $y$, $z$ and $w$ may satisfy $0 < x < 1$, $0 \leq y \leq 0.6$, $0 \leq z \leq 0.6$, $0 \leq w \leq 0.015$, may satisfy $0.33 \leq x \leq 0.95$, $0.01 \leq y \leq 0.35$, $0 \leq z \leq 0.35$, $0 \leq w \leq 0.01$ and may satisfy $0.33 \leq x \leq 0.95$, $0.02 \leq y \leq 0.35$, $0,05 \leq z \leq 0.35$ and $0 \leq w \leq 0.01$.

$M^1$ may represent at least one of Mn and Al. $M^2$ may represent at least one selected from the group consisting of Mg, Ca, Ti, Zr, Nb, Ta, Cr, Mo, W, Fe, Cu, Si, Sn, Bi, Ga, Y, Sm, Er, Ce, Nd, La, Cd and Lu, and may represent at least one selected from the group consisting of Zr, Ti, Mg, Ta, Nb, Mo and W.

The secondary particles constituting the positive electrode active material may have an attached matter containing niobium on the surfaces thereof. The attached matter containing niobium may attach to the surface of the secondary particles or may attach to the grain boundaries of the secondary particles. The attached matter containing niobium may attach to the surfaces of the primary particles constituting the secondary particles, and may be solid-solved in at least some of the primary particles. In addition, the secondary particles constituting the positive electrode active material may have an attached matter containing a compound having ion conductivity and containing boron, silicon and titanium, in addition to the attached matter containing niobium.

An attached amount of the attached matter containing niobium in the positive electrode active material is, for example, from 0.1 mol% to 10 mol%, and preferably from 0.2 mol% to 8 mol% in terms of niobium based on the lithium transition metal composite oxide. When the attached amount of niobium is in the above range, resistance components may be reduced while good cycle characteristics are maintained.

Examples of the attached matter containing niobium include niobium-containing compounds such as lithium niobate. The attached matter containing niobium may be obtained by mixing a niobium compound solution or dispersion or a solid niobium compound with the secondary particles, or may be obtained by heat treating the mixture as necessary.

The content rate of the positive electrode active material in the active material layer of the positive electrode is, for example, no less than 60 mass%, and preferably no less than 70 mass%. The content rate of the positive electrode active material is, for example, no more than 95 mass%, preferably no more than 90 mass%. When the content rate of the positive electrode active material is no less than 60 mass%, a sufficient battery capacity may be obtained. When the content rate of the positive electrode active material is no more than 95 mass%, increase in resistance may be suppressed.

Solid electrolyte material

The solid electrolyte material applied to the positive electrode may be any material having lithium ion conductivity. Examples thereof include inorganic solid electrolyte materials such as a sulfide solid electrolyte material, an oxide solid electrolyte material, a nitride solid electrolyte material and a halide solid electrolyte material.

Examples of the sulfide solid electrolyte material include $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-$Li_2O$, $Li_2S$-$P_2S_5$-$Li_2O$-LiI, $Li_2S$-$SiS2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-

SiS$_2$-P$_2$S$_5$-LiI, Li2S-B2S3 and Li$_2$S-P$_2$S$_5$-Z$_m$S$_n$ (m and n are positive numbers and Z is at least one selected from the group consisting of Ge, Zn, and Ga), Li$_2$S-GeS$_2$, Li$_2$S-SiS$_2$-Li$_3$PO$_4$ and Li$_2$S-SiS$_2$-Li$_x$MO$_y$ (x and y are positive numbers and M is at least one selected from the group consisting of P, Si, Ge, B, Al, Ga and In) and Li$_{10}$GeP$_2$Si$_2$.

In particular, the sulfide solid electrolyte material preferably includes an ion conductor containing Li, A (A is at least one selected from the group consisting of P, Si, Ge, Al and B) and S. Furthermore, the ion conductor preferably has an anion structure (for example, PS$_4^{3-}$, SiS$_4^{4-}$, GeS$_4^{4-}$, AlS$_3^{3-}$, BS$_3^{3-}$ structures) having an ortho-composition as a main component of the anion. As a result, a sulfide solid electrolyte material having a high chemical stability may be obtained. The ratio of the anion structure of the ortho-composition is preferably no less than 70 mol%, and more preferably no less than 90 mol% based on the total anion structure in the ion conductor. The ratio of the anion structure of the ortho-composition may be determined by Raman spectroscopy, NMR and XPS.

The sulfide solid electrolyte material preferably contains at least one selected from the group consisting of LiI, LiBr and LiCl in addition to the ion conductor. It is considered that at least a part of LiI, LiBr and LiCl is usually present in a state of being incorporated into the structure of the ion conductor as an LiI component, an LiBr component and an LiCl component, respectively. The sulfide solid electrolyte material may have a peak of LiI in X-ray diffraction measurement, but preferably has no peak of LiI. As a result, Li ion conductivity is further enhanced. The same applies to LiBr and LiCl in this point. The content rate of LiX (X = I, Cl, Br) in the sulfide solid electrolyte material is, for example, in the range of from 10 mol% to 30 mol%, and preferably in the range of from 15 mol% to 25 mol%. Here, the ratio of LiX refers to the total ratio of LiX contained in the sulfide solid electrolyte material.

Examples of the oxide solid electrolyte material include Li$_2$O-B$_2$O$_3$-P$_2$O$_5$, Li$_2$O-SiO$_2$, Li-La-Ta-O (for example, Li$_5$La$_3$Ta$_2$O$_{12}$), Li-La-Zr-O (for example, Li$_7$La$_3$Zr$_2$O$_{12}$), Li-Ba-La-Ta-O (for example, Li$_6$BaLa$_2$Ta$_2$O$_{12}$), Li$_{1+x}$Si$_x$P$_{1-x}$O$_4$ ($0 \leq x < 1$, for example Li$_{3.6}$Si$_{0.6}$P$_{0.4}$O$_4$), Li$_{1+x}$Al$_x$Ge$_{2-x}$(PO$_4$)$_3$ ($0 \leq x \leq 2$), Li$_{1+x}$Al$_x$Ti$_{2-x}$(PO$_4$)$_3$ ($0 \leq x \leq 2$) and Li$_3$PO$_{(4-3/2x)}$N$_x$ ($0 \leq x < 1$). Examples of the nitride solid electrolyte material include Li$_3$N. Examples of the halide solid electrolyte material include LiI.

The solid electrolyte material may be a crystalline material or an amorphous material. The solid electrolyte material may be glass or crystallized glass (glass ceramics). Examples of the method for producing glass include a method in which a raw material composition is subjected to an amorphization treatment. Examples of the amorphization treatment include a melt quenching method and a mechanical milling method. Examples of a method for producing crystallized glass include a method in which glass is heated to a temperature equal to or higher than a crystallization temperature. Examples of a method for producing the crystalline material include a method in which a raw material composition is heated in a solid state (solid phase method).

The shape of the solid electrolyte material is not particularly limited, and examples thereof include a substantially spherical shape. The volume average particle diameter (D$_{50}$) of the solid electrolyte material is, for example, no less than 0.1 $\mu$m, and may be no less than 0.5 $\mu$m. The volume average particle size (D$_{50}$) of the solid electrolyte material is, for example, no more than 50 $\mu$m, and may be no more than 10 $\mu$m. The Li ion conductivity of the solid electrolyte material is, for example, no less than $1 \times 10^{-5}$ S/cm, preferably no less than $1 \times 10^{-4}$ S/cm, and more preferably no less than $1 \times 10^{-3}$ S/cm at 25°C.

The content rate of the solid electrolyte material in the active material layer of the positive electrode is, for example, no less than 1 mass%, preferably no less than 5 mass%, and more preferably no less than 10 mass%. When the content rate of the solid electrolyte material is no less than 1 mass%, Li ion conductivity of the active material layer of the positive electrode sufficiently improves. The content rate of the solid electrolyte material in the active material layer of the positive electrode is, for example, no more than 60 mass%, preferably no more than 50 mass%, more preferably no more than 40 mass%, and further preferably no more than 30 mass%. When the content rate of the solid electrolyte material is no more than 60 mass%, the content rate of the positive electrode active material does not become relatively too low, and a sufficient battery capacity is obtained. In the active material layer of the positive electrode, the content rate of the solid electrolyte material is preferably lower than the content rate of the positive electrode active material.

Furthermore, the ratio of the content of the solid electrolyte material to the content of the positive electrode active material in the active material layer of the positive electrode (solid electrolyte material/positive electrode active material) may be, for example, no less than 0.01, and preferably no less than 0.1. The ratio of the content of the solid electrolyte material to the content of the positive electrode active material is, for example, no more than 1.5, and preferably no more than 1.

The positive electrode may contain a conductive assistant in the active material layer in addition to the positive electrode active material and the solid electrolyte material. By further including the conductive assistant, electron conductivity in the active material layer of the positive electrode may further improve. Examples of the conductive assistant include carbon materials such as acetylene black (AB), Ketjen black (KB), vapor grown carbon fiber (VGCF), carbon nanotube (CNT) and carbon nanofiber (CNF).

When the active material layer of the positive electrode contains a conductive assistant, the content rate of the conductive assistant in the active material layer of the positive electrode is, for example, no less than 1 mass%, and may be preferably no less than 2 mass%. The content rate of the conductive assistant in the active material layer of the positive electrode is, for example, no more than 10 mass%, and may be preferably no more than 5 mass%.

The positive electrode may further contain a binder in the active material layer. By including the binder, moldability of the active material layer of the positive electrode may further improve. Examples of the binder include polyvinylidene fluoride (PVDF), butylene rubber (BR) and styrene-butadiene rubber (SBR). The positive electrode may further contain a thickener in the active material layer.

The form of the positive electrode may be a form having a current collector and a positive electrode active material layer disposed on the current collector, or a form having only the positive electrode active material layer formed into a desired shape.

The method for producing the positive electrode may include a preparation step of preparing a positive electrode mixture containing at least a positive electrode active material and a solid electrolyte material, and a forming step of forming the prepared positive electrode mixture into a desired shape. The forming step may include, if necessary, applying the positive electrode mixture onto the current collector and forming the applied positive electrode mixture.

Examples of a method for producing the positive electrode mixture include a method including mixing a positive electrode active material and a solid electrolyte material, and as necessary, including mixing a conductive assistant together. The mixing may be, for example, dry mixing, and may be performed with a mixer. Examples of the production method include a method including adding a dispersion medium to a mixture of a positive electrode active material and a solid electrolyte material to form a slurry, performing a dispersion promoting treatment on the slurry, and removing the dispersion medium from the slurry. Examples of the dispersion promoting treatment include ultrasonic treatment and shaking treatment.

Examples of a method for forming the positive electrode mixture include compression molding. The pressure for the compression the ratio of the number of moles is, for example, no less than 50 MPa, and may be from 50 MPa to 500 MPa or from 100 MPa to 350 MPa. When the active material layer of the positive electrode is formed by compression molding, the positive electrode active material and the solid electrolyte material are brought into close contact with each other, and interface resistance may be reduced.

All-solid-state lithium ion secondary battery

The all-solid-state lithium ion secondary battery comprises a positive electrode including a positive electrode active material layer containing a positive electrode active material and a solid electrolyte material, a negative electrode including a negative electrode active material layer containing a negative electrode active material, and a solid electrolyte layer disposed between the positive electrode active material layer and the negative electrode active material layer. When the secondary particles constituting the positive electrode active material have the above-described specific structure, it is possible to form an all-solid-state lithium ion secondary battery in which internal resistance is reduced.

Positive electrode

The positive electrode includes a form composed of a positive electrode mixture containing the above-described positive electrode active material and solid electrolyte material. In the positive electrode, if necessary, the positive electrode active material layer may be formed integrally with a positive electrode current collector that collects current. The positive electrode active material comprises secondary particles comprising an aggregate of a plurality of primary particles containing a lithium transition metal composite oxide. The smoothness and the degree of circularity of the secondary particles are as described above, and preferred aspects are also the same. The thickness of the positive electrode active material layer is, for example, in the range of from 0.1 $\mu$m to 1000 $\mu$m, and preferably in the range of from 0.1 $\mu$m to 300 $\mu$m.

Negative electrode

The negative electrode includes a negative electrode active material layer containing at least a negative electrode active material. In the negative electrode, if necessary, the negative electrode active material layer may be formed integrally with a negative electrode current collector that collects current. The negative electrode active material layer may further contain at least one of a solid electrolyte material, a conductive assistant and a binder as necessary. The solid electrolyte material, the conductive assistant and the binder are as described above.

Examples of the negative electrode active material include a carbon active material, a metal active material and an oxide active material. Examples of the carbon active material include graphite, hard carbon and soft carbon. Examples of the metal active material include In, Al, Si, Sn and an alloy containing at least these metals. Examples of the oxide active material include niobium oxide (for example, $Nb_2O_5$), lithium titanate (for example, $Li_4Ti_5O_{12}$) and silicon oxide (for example, SiO). The thickness of the negative electrode active material layer is, for example, in the range of

from 0.1 $\mu$m to 1000 $\mu$m, and preferably in the range of from 0.1 $\mu$m to 300 $\mu$m.

Solid electrolyte layer

The solid electrolyte layer is a layer disposed between the positive electrode active material layer and the negative electrode active material layer. The solid electrolyte layer is a layer containing at least a solid electrolyte material and may further contain a binder as necessary. The solid electrolyte material and the binder are as described above.

The content rate of the solid electrolyte material contained in the solid electrolyte layer is, for example, in the range of from 10 mass% to 100 mass%, and preferably in the range of from 50 mass% to 100 mass%. The thickness of the solid electrolyte layer is, for example, in the range of from 0.1 $\mu$m to 1000 $\mu$m, and preferably in the range of from 0.1 $\mu$m to 300 $\mu$m. Examples of the method for forming the solid electrolyte layer include a method for compression-molding a solid electrolyte material.

Other constituents

The all-solid-state lithium ion secondary battery comprises at least the above-described positive electrode, negative electrode and solid electrolyte layer. The all-solid-state lithium ion secondary battery may further comprise a positive electrode current collector that collects current of the positive electrode active material layer and a negative electrode current collector that collects current of the negative electrode active material layer. Examples of the material of the positive electrode current collector include stainless steel (SUS), Ni, Cr, Au, Pt, Al, Fe, Ti and Zn. Examples of the material of the negative electrode current collector include stainless steel (SUS), Cu, Ni, Fe, Ti, Co and Zn. Further, the all-solid-state lithium ion secondary battery may be provided with an optional battery case such as a SUS battery case. Examples of the shape of the all-solid-state lithium ion secondary battery include a coin type, a laminate type, a cylindrical type and a square type.

Non-aqueous electrolyte secondary battery

The positive electrode active material obtained according to one aspect of the present disclosure may also be used for a positive electrode for a non-aqueous electrolyte secondary battery (hereinafter, a non-aqueous electrolytic solution secondary battery) using a non-aqueous electrolyte. Even when the positive electrode active material is used in a non-aqueous electrolyte secondary battery, cracking of secondary particles due to pressure molding in forming a positive electrode may be reduced. The non-aqueous electrolyte secondary battery is provided with a negative electrode for a non-aqueous electrolyte secondary battery, a non-aqueous electrolyte and a separator, in addition to the above-described positive electrode. As the negative electrode, the non-aqueous electrolyte and the separator in the non-aqueous electrolyte secondary battery, those for a non-aqueous electrolyte secondary battery described in, for example, Japanese Patent Laid-open Publication No. 2002-075367, Japanese Patent Laid-open Publication No. 2011-146390 and Japanese Patent Laid-open Publication No. 2006-12433 (these are incorporated in this specification by reference in their entirety) may be appropriately used.

Method for producing positive electrode active material

The method for producing a positive electrode active material may comprise, for example, a composite oxide preparation step of preparing a nickel cobalt composite oxide containing secondary particles comprising an aggregate of a plurality of primary particles containing a composite oxide containing nickel and cobalt, wherein a smoothness of the secondary particles is more than 0.74, a lithium mixing step of mixing the nickel cobalt composite oxide and a lithium compound to obtain a lithium mixture, and a synthesis step of heat-treating the lithium mixture to obtain a lithium transition metal composite oxide containing nickel and cobalt and having a layered structure. The positive electrode active material to be produced contains secondary particles comprising an aggregate of a plurality of primary particles containing a lithium transition metal composite oxide. A smoothness of the secondary particles may be more than 0.73. The degree of circularity of the secondary particles may be more than 0.83. The method for producing a positive electrode active material may be a method for producing a positive electrode active material comprising secondary particles comprising an aggregate of a plurality of primary particles containing a lithium transition metal composite oxide, in which a smoothness of the secondary particles is more than 0.73, and a degree of circularity of the secondary particles is more than 0.83.

Composite oxide preparation step

In the composite oxide preparation step, a nickel cobalt composite oxide containing secondary particles comprising an aggregate of a plurality of primary particles containing a composite oxide containing nickel and cobalt is prepared. A smoothness of the secondary particles constituting the nickel cobalt composite oxide may be more than 0.74. The nickel cobalt composite oxide may be appropriately selected and prepared from commercially available products or may be produced and prepared by the method for producing a nickel cobalt composite oxide described later. Details of the nickel cobalt composite oxide to be prepared will be described later.

Lithium mixing step

In the lithium mixing step, the nickel cobalt composite oxide to be prepared and a lithium compound are mixed to obtain a lithium mixture. Examples of the mixing method include a method of dry-mixing the nickel cobalt composite oxide and the lithium compound with a stirring mixer, and a method of preparing a slurry of the nickel cobalt composite oxide and wet-mixing the slurry with a mixer such as a ball mill. Examples of the lithium compound include lithium hydroxide, lithium nitrate, lithium carbonate and mixtures thereof.

The ratio of the number of moles of lithium to the total number of moles of metal elements other than lithium in the lithium mixture (also referred to as a lithium ratio) may be, for example, from 0.90 to 1.30, and is preferably from 1.0.to 1.20. When the lithium ratio is no less than 0.90, production of a byproduct tends to be suppressed. When the lithium ratio is no more than 1.30, an increase in the amount of the alkali component present on the surface of the lithium mixture is suppressed, moisture adsorption due to deliquescence of the alkali component is suppressed, and handleability tends to improve.

Synthesis step

In the synthesis step, the lithium mixture is heat-treated to obtain a lithium transition metal composite oxide containing nickel and cobalt and having a layered structure. The lithium transition metal composite oxide is contained in a primary particle, and secondary particles comprising an aggregate of a plurality of primary particles are contained in the positive electrode active material. In the synthesis step, lithium contained in the lithium compound may be diffused into the nickel cobalt composite oxide to obtain a lithium transition metal composite oxide.

The heat treatment temperature may be, for example, from 650°C to 990°C, and is preferably from 700°C to 960°C. When the heat treatment temperature is no less than 650°C, increase in unreacted lithium content tends to be suppressed. When the heat treatment temperature is no more than 990°C, decomposition of the generated lithium transition metal composite oxide tends to be suppressed. The heat treatment time may be, for example, no less than 10 hours as a time for maintaining the maximum temperature. The atmosphere for the heat treatment may be in the presence of oxygen, and is preferably an atmosphere containing from 10 volume% to 100 volume% of oxygen.

In the method for producing a positive electrode active material, after the synthesis step, a heat-treated product obtained may be subjected to treatments such as rough grinding, pulverization and dry sieving as necessary.

Method for producing nickel cobalt composite oxide

The method for producing a nickel cobalt composite oxide comprises, for example, a first solution preparation step of preparing a first solution containing nickel ions and cobalt ions, a second solution preparation step of preparing a second solution containing a complex ion forming factor, a liquid medium preparation step of preparing a liquid medium having a pH in a range of from 10 to 13.5, a crystallization step of supplying the first solution and the second solution to the liquid medium separately and simultaneously, and supplying a polymer containing a constituent unit derived from (meth)acrylic acid to the liquid medium, to obtain a reaction solution having a pH maintained in a range of from 10 to 13.5, a composite hydroxide collection step of obtaining a composite hydroxide containing nickel and cobalt from the reaction solution, and a composite hydroxide heat treatment step of heat-treating the obtained composite hydroxide to obtain secondary particles comprising an aggregate of a plurality of primary particles containing a composite oxide containing nickel and cobalt. A smoothness of the secondary particles containing the nickel cobalt composite oxide to be produced is more than 0.74. The method for producing a nickel cobalt composite oxide may be a method for producing a nickel cobalt composite oxide containing secondary particles comprising an aggregate of a plurality of primary particles containing a composite oxide containing nickel and cobalt, wherein a smoothness of the secondary particles is more than 0.74.

First solution preparation step

In the first solution preparation step, a first solution containing nickel ions and cobalt ions is prepared. The first solution is prepared by dissolving a predetermined amount of the salt containing each metal element in water according to the composition of the intended nickel cobalt composite oxide. Examples of the salt include nitrate, sulfate and hydrochloride. When the first solution is prepared, an acidic substance (for example, an aqueous solution of sulfuric acid) may be added to water. As a result, the salt containing each metal element may easily dissolve. In the preparation of the first solution, a basic substance may be further added to adjust the pH. In addition, the total number of moles of metal elements such as nickel and cobalt in the first solution may be appropriately set according to the average particle diameter of the intended nickel cobalt composite oxide. Here, the total number of moles of metal elements means the total number of moles of nickel and cobalt when the first solution contains nickel and cobalt, and means the total number of moles of nickel, cobalt, and manganese when the first solution contains nickel, cobalt and manganese.

The first solution may further contain at least one of aluminum ions and manganese ions in addition to nickel ions and cobalt ions. In addition to these ions, the first solution may further contain ions of at least one second metal element selected from the group consisting of magnesium, calcium, titanium, zirconium, niobium, tantalum, chromium, molybdenum, tungsten, iron, copper, silicon, tin, bismuth, gallium, yttrium, samarium, erbium, cerium, neodymium, lanthanum, cadmium and lutetium. The second metal element may be at least one selected from the group consisting of zirconium, titanium, magnesium, tantalum, niobium, molybdenum and tungsten.

The concentration of metal ions such as nickel and cobalt in the first solution may be, for example, from 1.0 mol/L to 2.6 mol/L, and is preferably from 1.5 mol/L to 2.2 mol/L in total of the respective metal ions. When the concentration of metal ions of the first solution is no less than 1.0 mol/L, the amount of crystallized products per reaction tank is sufficiently obtained, and therefore productivity improves. When the concentration of metal ions of the first solution is no more than 2.6 mol/L, it is suppressed that the concentration of metal ions exceeds the saturated concentration of the metal salt at normal temperature, and decrease in the concentration of metal ions in the solution due to precipitation of the metal salt crystal is suppressed.

Second solution preparation step

In the second solution preparation step, a second solution containing a complex ion forming factor is prepared. The second solution contains a complex ion forming factor capable of forming a complex ion with the metal ion contained in the first solution. For example, when the complex ion forming factor is ammonia, an aqueous solution of ammonia may be used as the second solution. The content of ammonia contained in the aqueous solution of ammonia may be, for example, from 5 mass% to 25 mass%, and is preferably from 10 mass% to 20 mass%.

Liquid medium preparation step

In the liquid medium preparation step, a liquid medium having a pH in the range of from 10 to 13.5 is prepared. The liquid medium is adjusted to a solution having a pH of from 10 to 13.5 using, for example, a predetermined amount of water and a basic solution such as an aqueous solution of sodium hydroxide in a reaction vessel. By adjusting the pH of the solution to a range of from 10 to 13.5, it is possible to suppress pH fluctuation of the reaction solution in the initial stage of the reaction.

Crystallization step

In the crystallization step, the first solution and the second solution are separately and simultaneously supplied to the liquid medium in which the pH of the reaction solution to be formed is maintained in the range of from 10 to 13.5. In addition, a polymer containing a constituent unit derived from (meth)acrylic acid is supplied to the liquid medium. As a result, a composite hydroxide particle containing nickel and cobalt may be obtained from the reaction solution. The liquid medium may be simultaneously supplied with a basic solution in addition to the first solution and the second solution. As a result, the pH of the reaction solution may be easily maintained in the range of from 10 to 13.5.

In the crystallization step, it is preferable to supply each solution such that the pH of the reaction solution is maintained in the range of from 10 to 13.5. For example, the pH of the reaction solution may be maintained in the range of from 10 to 13.5 by adjusting the supply amount of the second solution according to the supply amount of the first solution. When the pH of the reaction solution is less than 10, the amount of impurities contained in the obtained composite hydroxide (for example, a sulfuric acid component or a nitric acid component other than metals contained in the mixed solution) increases, which may cause a decrease in the capacity of the secondary battery as a final product. When the pH is more than 13.5, many fine secondary particles are generated, and handleability of the obtained composite hydroxide may deteriorate. The temperature of the reaction solution may be controlled to be, for example, in the range of from 25°C to 80°C.

In the crystallization step, the concentration of nickel ions in the reaction solution may be maintained, for example, in the range of from 10 ppm to 1000 ppm and is preferably maintained in the range of from 10 ppm to 100 ppm. When the concentration of nickel ions is no less than 10 ppm, the composite hydroxide sufficiently precipitates. When the concentration of nickel ions is no more than 1000 ppm, the amount of nickel eluted is small, and thus deviation from a target composition is suppressed. For example, when an aqueous solution of ammonia is used as the complex ion forming solution, the nickel ion concentration may be adjusted by supplying the complex ion forming solution such that the ammonium ion concentration in the reaction solution is from 1000 ppm to 15000 ppm.

The period of time for supplying the first solution may be, for example, from 6 hours to 60 hours, preferably from 8 hours to 60 hours, and more preferably from 10 hours to 42 hours. When the period of time is no less than 6 hours, because the precipitation speed of the composite hydroxide is slow, a nickel cobalt composite oxide having higher smoothness tends to be obtained. When the period of time is no more than 60 hours, productivity may further improve.

The value obtained by setting the total number of moles of nickel, cobalt and the like in the first solution supplied through the entire crystallization step as a denominator and setting the total number of moles of nickel, cobalt and the like in the first solution supplied per hour as a numerator may be, for example, from 0.015 to 0.125, and is preferably from 0.020 to 0.10. When the value is no less than 0.015, productivity may further improve. When the value is no more than 0.125, a nickel cobalt composite oxide having higher smoothness tends to be obtained.

The polymer containing a constituent unit derived from (meth)acrylic acid supplied to the liquid medium may be, for example, an anionic polymer having a carboxy group capable of functioning as a surfactant or a dispersant. When the polymer contains a constituent unit derived from (meth)acrylic acid, foaming of the reaction solution is suppressed, and at least one of the smoothness and the degree of circularity of the obtained composite hydroxide improves. For example, in a nonionic dispersant, which is common as a dispersant, foaming occurs in the reaction solution, and particle diameter control may become difficult.

Examples of the constituent unit derived from (meth)acrylic acid constituting the polymer include at least one of a constituent unit derived from acrylic acid, a constituent unit derived from methacrylic acid, a constituent unit derived from acrylic acid ester, a constituent unit derived from methacrylic acid ester, a constituent unit derived from acrylic acid amide and a constituent unit derived from methacrylic acid amide. The polymer may further contain another constituent unit in addition to the constituent unit derived from (meth)acrylic acid. Examples of the other constituent unit include a constituent unit derived from an unsaturated dibasic acid or an acid anhydride thereof, or combinations thereof.

The weight average molecular weight of the polymer may be, for example, no more than 50,000 and is preferably no more than 40,000, no more than 30,000, or no more than 20,000. The lower limit of the weight average molecular weight of the polymer may be, for example, no less than 1000, preferably no less than 3000, and more preferably no less than 6000. When the weight average molecular weight of the polymer is within the range, particle diameter control of the secondary particles tends to be easier, and the smoothness tends to be higher.

The polymer may be supplied to the liquid medium as an alkali metal salt, an organic amine salt, or an ammonium salt in which at least a part of the carboxy group is neutralized with a neutralizing base such as an alkali metal ion such as a sodium ion, an organic ammonium ion and an ammonium ion. The polymer may be used alone, or two or more kinds of them may be used in combination. When two or more kinds of polymers are used, the polymers may be a combination of different compositions, a combination of different weight average molecular weights, a combination of different neutralizing bases, or a combination thereof.

Another surfactant other than the polymer containing a constituent unit derived from (meth)acrylic acid may be used in combination with the polymer supplied to the liquid medium. Examples of the other surfactant include anionic surfactants having a phosphate group or a sulfonate group, cationic surfactants having a quaternary ammonium group and nonionic surfactants. The supply amount of the other surfactant may be, for example, no more than 10 mass% and is preferably no more than 1 mass% based on the supply amount of the polymer containing the constituent unit derived from (meth)acrylic acid.

The supply amount of the polymer to the liquid medium may be, for example, from 0.5 mass% to 5 mass% and is preferably from 1 mass% to 3 mass%, based on the total mass of the composite hydroxide to be generated. When the supply amount of the polymer is no less than 0.5 mass% based on the total mass of the composite hydroxide to be generated, at least one of the smoothness and the degree of circularity of the composite hydroxide to be obtained tends to improve. When the supply amount is no more than 5 mass%, aggregation of secondary particles in the crystallization step is suppressed, and at least one of the smoothness and the degree of circularity of the composite hydroxide to be obtained tends to further improve.

In the supply of the polymer to the liquid medium, the polymer solution containing the polymer may be supplied independently of the first solution and the second solution, or may be supplied together with at least one of the first solution and the second solution. When the polymer solution is supplied together with at least one of the first solution and the second solution, at least one of the first solution and the second solution may contain the polymer, and the polymer solution may be mixed with at least one of the first solution and the second solution and then supplied to the liquid medium. The content of the polymer in the solution used for supplying the polymer to the liquid medium may be, for example, from 0.05 mass% to 3.1 mass%, and is preferably from 0.1 mass% to 0.8 mass% based on the mass of the solution.

The crystallization step may include, in this order, separately and simultaneously supplying the first solution and the second solution to the liquid medium, and supplying the polymer separately from and simultaneously with the first solution and the second solution, or supplying the polymer together with at least one of the first solution and the second solution. In other words, prior to the supply of the polymer, part of the first solution and the second solution may be separately and simultaneously supplied to the liquid medium. By supplying the first solution and the second solution to the liquid medium, the particle diameter of the composite hydroxide containing nickel and cobalt generated in the liquid medium may be controlled to a desired size. Here, the composite hydroxide may be produced, for example, as seed crystals. By generating a composite hydroxide having a desired particle diameter in the liquid medium prior to the supply of the polymer, aggregation of primary particles is suppressed, and at least one of the smoothness and the degree of circularity of the composite hydroxide generated as secondary particles tends to further improve.

When the crystallization step includes supplying the first solution and the second solution separately and simultaneously to the liquid medium prior to the supply of the polymer, the supply time of the first solution and the second solution prior to the supply of the polymer may be from 2% to 95% of the total supply time. The supply time of the first solution and the second solution prior to the supply of the polymer may be preferably from 3% to 40%, and more preferably from 5% to 20%. By setting the supply time of the first solution and the second solution prior to the supply of the polymer within this range, a composite hydroxide having a desired particle diameter may be generated in a liquid medium, aggregation of primary particles is suppressed, and at least one of the smoothness and the degree of circularity further improves as described above.

The method for producing a nickel cobalt composite oxide may include a seed crystal formation step prior to the crystallization step. In the seed crystal formation step, for example, part of the prepared first solution is supplied to the liquid medium to form a composite hydroxide containing nickel and cobalt in the liquid medium, for example, as seed crystals. That is, the liquid medium to be subjected to the crystallization step may be a seed solution containing the composite hydroxide.

When composite hydroxide particles are generated in advance in the liquid medium prior to the crystallization step, one particle of the composite hydroxide generated in advance becomes a seed crystal constituting one particle of the composite hydroxide obtained after the crystallization step. As a result, the total number of the secondary particles of the composite hydroxide obtained after the crystallization step may be controlled by the number of the composite hydroxide particles generated in advance. For example, when a large amount of the first solution is supplied in advance, the number of the composite hydroxide particles to be generated increases, and thus the average particle diameter of the secondary particles of the composite hydroxide after the crystallization step tends to become small. In addition, for example, when the pH of the initial liquid medium is made higher than the pH of the reaction solution to be obtained, the generation of the composite hydroxide particles is prioritized over the growth of the composite hydroxide particles. As a result, composite hydroxide particles having a more homogeneous particle diameter are generated, and composite hydroxide particles having a narrower particle size distribution may be obtained.

In the crystallization step, each of the first solution, the second solution, and the polymer solution may be continuously or intermittently supplied to the liquid medium. From the viewpoint of improving the degree of circularity and the smoothness, it is preferable that the first solution be continuously supplied over the entire supply time of the first solution in the crystallization step. Here, "continuously over the entire supply time" means that there is almost no time when supply is not made throughout the supply time. The wording that there is almost no supply time means that the time when the supply is not made is less than 1% of the entire supply time.

Composite hydroxide collection step

In the composite hydroxide collection step, a composite hydroxide containing nickel and cobalt is separated from the reaction solution and collected. The collection of the composite hydroxide from the reaction solution may be performed, for example, by a separation means that is normally used such as filtration and centrifugation of a precipitate generated. The resulting precipitate may be subjected to treatments such as water washing, filtration and drying. The composition ratio of metal elements in the composite hydroxide may be almost the same as the composition ratio of metal elements in the lithium transition metal composite oxide obtained using these as raw materials.

In the composite hydroxide to be obtained, the ratio of the number of moles of nickel to the total number of moles of metal elements contained in the composite hydroxide may be, for example, more than 0 and less than 1. The ratio of the number of moles of nickel to the total number of moles of metal elements is preferably no less than 0.33. The ratio of the number of moles of nickel to the total number of moles of metal elements may be no less than 0.4, or no less than 0.55. The ratio of the number of moles of nickel to the total number of moles of metal elements is preferably no more than 0.95, or no more than 0.8.

In the composite hydroxide to be obtained, the ratio of the number of moles of cobalt to the total number of moles of metal elements contained in the composite hydroxide may be more than 0 and no more than 0.6. The ratio of the number of moles of cobalt to the total number of moles of metal elements is preferably no less than 0.02, no less than 0.05, no less than 0.1, or no less than 0.15. The ratio of the number of moles of cobalt to the total number of moles of metal elements is preferably no more than 0.35. The ratio of the number of moles of cobalt to the total number of moles of metal elements may be no more than 0.3, or no more than 0.25.

The composite hydroxide may contain at least one of manganese and aluminum in its composition. When the composite hydroxide contains at least one of manganese and aluminum in its composition, the ratio of the total number of moles of manganese and aluminum to the total number of moles of metal elements is, for example, more than 0, preferably no less than 0.01, more preferably no less than 0.05, further preferably no less than 0.1, and particularly preferably no less than 0.15. The ratio of the total number of moles of manganese and aluminum to the total number of moles of metal elements is, for example, no more than 0.6, and preferably no more than 0.35. The ratio of the total number of moles of manganese and aluminum to the total number of moles of metal elements may be no more than 0.33, no more than 0.3, or no more than 0.25.

The composite hydroxide may contain at least one second metal element in its composition. When the composite hydroxide contains at least one second metal element in its composition, the ratio of the total number of moles of the second metal element to the total number of moles of metal elements is, for example, more than 0, preferably no less than 0.001, and more preferably no less than 0.003. The ratio of the total number of moles of the second metal element to the total number of moles of metal element is, for example, no more than 0.02, preferably no more than 0.015, and more preferably no more than 0.01.

The composite hydroxide may have, for example, a composition represented by the following Formula (3).

$$Ni_jCO_kM^1_mM^2_n(OH)_{2+\gamma} \qquad (3)$$

In Formula (3), $M^1$ represents at least one of Mn and Al. $M^2$ represents at least one selected from the group consisting of Ca, Zr, Ti, Mg, Ta, Nb, Cr, Mo, W, Fe, Cu, Si, Sn, Bi, Ga, Y, Sm, Er, Ce, Nd, La, Cd and Lu. j, k, m, n and $\gamma$ satisfy $0 < j < 1$, $0 < k \leq 0.6$, $0 \leq m \leq 0.6$, $0 \leq n \leq 0.02$ and $0 \leq \gamma \leq 2$. Preferably, j, k, m, n and y satisfy $0.33 \leq j \leq 0.95$, $0.02 \leq k \leq 0.35$, $0.01 \leq m \leq 0.35$, $0 \leq n \leq 0.015$ and $0 \leq \gamma \leq 1$. Preferably, $M^2$ is at least one selected from the group consisting of Zr, Ti, Mg, Ta, Nb, Mo and W.

Composite hydroxide heat treatment step

In the composite hydroxide heat treatment step, the obtained composite hydroxide is heat-treated to obtain a nickel cobalt composite oxide containing secondary particles comprising an aggregate of a plurality of primary particles containing a composite oxide containing nickel and cobalt. The heat treatment dehydrates the composite hydroxide to produce a nickel cobalt composite oxide. The nickel cobalt composite oxide may be a precursor of the lithium transition metal composite oxide or a positive electrode active material precursor.

The temperature of the heat treatment may be, for example, from 105°C to 900°C, and is preferably from 300°C to 500°C. The time for the heat treatment may be, for example, from 5 hours to 30 hours, and is preferably from 10 hours to 20 hours. The atmosphere of the heat treatment may be an atmosphere containing oxygen or an air atmosphere.

The smoothness of the secondary particles containing the obtained nickel cobalt composite oxide may be, for example, more than 0.74, and is preferably no less than 0.80 or no less than 0.85. The degree of circularity of the secondary particles constituting the nickel cobalt composite oxide is, for example, no less than 0.80, preferably no less than 0.85 or no less than 0.87. Here, the smoothness and the degree of circularity of the secondary particles containing the nickel cobalt composite oxide are measured in the same manner as in the secondary particles constituting the positive electrode active material. The upper limit of the smoothness and the degree of circularity of the secondary particles is no more than 1 and may be less than 1.

The particle size distribution of the secondary particles containing the nickel cobalt composite oxide is, for example, less than 0.8, preferably no more than 0.7, no more than 0.6, or no more than 0.5 as a value obtained by dividing the difference between the 90% particle diameter $D_{90}$ and the 10% particle diameter $D_{10}$ in volume-based cumulative particle size distribution by the 50% particle diameter $D_{50}$ ($(D_{90} - D_{10})/D_{50}$).

The volume average particle diameter of the secondary particles containing the nickel cobalt composite oxide is, for example, from 1 $\mu$m to 30 $\mu$m, preferably no less than 1.5 $\mu$m, more preferably no less than 2 $\mu$m, further preferably no less than 3 $\mu$m and is preferably no more than 18 $\mu$m, more preferably no more than 12 $\mu$m, and further preferably no more than 8 $\mu$m. When the volume average particle diameter of the secondary particles is within the above range, the fluidity is good, and output may further improve when the secondary battery is formed. Here, the volume average particle diameter is the 50% particle diameter $D_{50}$ corresponding to the cumulative 50% from the small diameter side in a volume-based cumulative particle size distribution.

The secondary particles containing the nickel cobalt composite oxide may be formed by aggregation of a plurality of primary particles. The average particle diameter $D_{SEM}$ of the primary particles based on electron microscope observation is, for example, from 0.1 $\mu$m to 1.5 $\mu$m, preferably no less than 0.12 $\mu$m, and more preferably no less than 0.15 $\mu$m. The average particle diameter $D_{SEM}$ of the primary particles based on electron microscope observation is preferably no more than 1.2 $\mu$m, and more preferably no more than 1.0 $\mu$m. When the average particle diameter of the primary particles based on electron microscope observation is within the above range, the output may improve when a battery is formed. Here, the average particle diameter of the primary particles based on electron microscope observation is synonymous with the average particle diameter in the positive electrode active material.

In the secondary particles containing the nickel cobalt composite oxide, the ratio $D_{50}/D_{SEM}$ of the 50% particle diameter $D_{50}$ to the average particle diameter $D_{SEM}$ based on electron microscope observation in volume-based cumulative particle size distribution may be, for example, no less than 2.5. The ratio $D_{50}/D_{SEM}$ is, for example, from 2.5 to 150, preferably no less than 5, and more preferably no less than 10. The ratio $D_{50}/D_{SEM}$ is preferably no more than 100, and more preferably no more than 50.

In the nickel cobalt composite oxide, the ratio of the number of moles of nickel to the total number of moles of metal elements contained in the nickel cobalt composite oxide may be, for example, more than 0 and less than 1. The ratio of the number of moles of nickel to the total number of moles of metal elements is preferably no less than 0.33. The ratio of the number of moles of nickel to the total number of moles of metal elements may be no less than 0.4, or no less than 0.55. The ratio of the number of moles of nickel to the total number of moles of metal elements is preferably no more than 0.95, or no more than 0.8.

In the nickel cobalt composite oxide, the ratio of the number of moles of cobalt to the total number of moles of metal elements contained in the nickel cobalt composite oxide may be more than 0 and no more than 0.6. The ratio of the number of moles of cobalt to the total number of moles of metal elements is preferably no less than 0.02, no less than 0.05, no less than 0.1, or no less than 0.15. The ratio of the number of moles of cobalt to the total number of moles of metal elements is preferably no more than 0.35. The ratio of the number of moles of cobalt to the total number of moles of metal elements may be no more than 0.3, or no more than 0.25.

The nickel cobalt composite oxide may contain at least one of manganese and aluminum in its composition. When the nickel cobalt composite oxide contains at least one of manganese and aluminum in its composition, the ratio of the total number of moles of manganese and aluminum to the total number of moles of metal elements is, for example, more than 0, preferably no less than 0.01, more preferably no less than 0.05, further preferably no less than 0.1, and particularly preferably no less than 0.15. The ratio of the total number of moles of manganese and aluminum to the total number of moles of metal elements is, for example, no more than 0.6, and preferably no more than 0.35. The ratio of the total number of moles of manganese and aluminum to the total number of moles of metal elements may be no more than 0.33, no more than 0.3, or no more than 0.25.

The nickel cobalt composite oxide may contain at least one second metal element in its composition. When the nickel cobalt composite oxide contains at least one second metal element in its composition, the ratio of the total number of moles of the second metal element to the total number of moles of metal element is, for example, more than 0, preferably no less than 0.001, and more preferably no less than 0.003. The ratio of the total number of moles of the second metal element to the total number of moles of metal element is, for example, no more than 0.02, preferably no more than 0.015, and more preferably no more than 0.01.

The nickel cobalt composite oxide may have, for example, a composition represented by the following Formula (1).

$$Ni_qCo_rM^1{}_sM^2{}_tO_{2+\alpha} \qquad (1)$$

In Formula (1), $M^1$ represents at least one of Mn and Al. $M^2$ represents at least one selected from the group consisting of Ca, Zr, Ti, Mg, Ta, Nb, Cr, Mo, W, Fe, Cu, Si, Sn, Bi, Ga, Y, Sm, Er, Ce, Nd, La, Cd and Lu. q, r, s, t and $\alpha$ satisfy $0 < q < 1$, $0 < r \leq 0.6$, $0 \leq s \leq 0.6$, $0 \leq t \leq 0.02$, $-0.1 \leq \alpha \leq 1.1$ and $q + r + s + t = 1$. Preferably, q, r, s, t and $\alpha$ satisfy $0.33 \leq q < 0.95$, $0.02 \leq r \leq 0.35$, $0.01 \leq s \leq 0.35$ and $0.01 \leq t \leq 0.015$. Preferably, $M^2$ is at least one selected from the group consisting of Zr, Ti, Mg, Ta, Nb, Mo and W.

Note that the present disclosure is not limited to the above embodiments. The above embodiments are examples, and it goes without saying that anything having substantially the same configuration as the technical idea described in the claims of the present disclosure and exhibiting the same operation and effect is included in the technical scope of the present disclosure.

EXAMPLES

Hereinafter, the present disclosure will be more specifically described with reference to Examples. The present disclosure is not limited to these Examples.

The primary particle size, that is, the average particle diameter of the primary particles based on electron microscope observation was measured as follows. With a scanning electron microscope (SEM), primary particles constituting the secondary particle were observed at a magnification ranging from 1000 times to 15000 times according to the particle diameter. 50 primary particles with recognizable outlines were selected, a sphere equivalent diameter was calculated from the outlines of the selected primary particles using image processing software, and an average particle diameter based on electron microscope observation of the primary particles was obtained as an arithmetic average value of the obtained sphere equivalent diameters.

The 10% particle diameter $D_{10}$, the 50% particle diameter $D_{50}$ and the 90% particle diameter $D_{90}$ in volume-based cumulative particle size distribution were determined as particle diameters corresponding to the cumulative 10%, 50% and 90% from the small diameter side by measuring volume-based cumulative particle size distribution under wet conditions with a laser diffraction particle size distribution analyzer (SALD-3100 manufactured by Shimadzu Corporation). The particle size distribution was calculated by dividing the difference between $D_{90}$ and $D_{10}$ by $D_{50}$. That is, the particle size distribution of the secondary particles was obtained by the following formula.

$$\text{Particle size distribution} = (D_{90} - D_{10})/D_{50}$$

The smoothness was measured as follows. The positive electrode active material was filled in epoxy and cured, and then a cross section was processed to prepare a cross section sample. With a scanning electron microscope (Hitachi High-Technologies Corporation SU8230; an acceleration voltage of 3 kV), a reflected electron image (magnification; 4000 times) was taken. For the obtained reflected electron image, 20 to 40 secondary particles with recognizable were selected, and the length of the entire perimeter $L_{op}$ was measured for each particle with image processing software (ImageJ). For the outline of the selected particle, the best fitting (approximating) ellipse was obtained using image processing software (ImageJ), and for each particle, the major axis a and the minor axis b of the approximate ellipse were obtained. The length of the entire perimeter L of the approximate ellipse was obtained from the obtained major axis a and minor axis b using the approximate expression of Gauss-Kummer formula. The smoothness was obtained as a ratio ($L/L_{op}$) of the length of the entire perimeter (L) of the approximate ellipse to the length of the entire perimeter ($L_{op}$) of the outline of the particle image. The smoothness of the secondary particles was calculated as an arithmetic average of the smoothness of the individual particles.

The degree of circularity was determined as the ratio ($L_1/L_0$) of the length of the entire perimeter (Li) calculated from the circle equivalent diameter to the length of the entire perimeter ($L_0$) of the outline shape of the secondary particle when the diameter of a circle having the same area as the particle image area in the outline shape of the secondary particle was defined as the circle equivalent diameter. Specifically, with a dry particle image analyzer (Morphologi G3S: Malvern Instruments Ltd.; lens magnification 20 times), the individual degrees of circularity of about 10,000 particles were measured, and the degree of circularity of the secondary particles was determined as an arithmetic average value thereof.

The tap density was measured as follows. In a 20 mL measuring cylinder, 20g of a sample was put, tapping was performed 150 times from a height of 6.5 cm, then the volume was measured. The obtained density was defined as a tap density. The bulk density was measured as follows. The sample passed through a sieve (mesh size: 0.5 mm) was put into a container having a volume of 30 mL until the sample was heaped up, and a mountain portion of the sample was scraped off with a spatula. The weight of the sample remaining in the container was measured to determine the bulk density.

The specific surface area was measured by a nitrogen gas adsorption method (single-point method) with a BET specific surface area measuring apparatus (Macsorb Model-1201 manufactured by Mountech Co., Ltd.).

(Example 1)

[Preparation of solid electrolyte]

Lithium sulfide and phosphorus pentasulfide were weighed under an argon atmosphere so that the material amount ratio was 7 : 3. The weighed materials were pulverized and mixed in an agate mortar to obtain sulfide glass. This was used as a solid electrolyte.

[Preparation of positive electrode]

A positive electrode active material having a primary particle size of 0.42 $\mu$m, a 50% particle size $D_{50}$ of 6.0 $\mu$m, a smoothness of 0.84, a degree of circularity of 0.88, a tap density of 2.48 g/cm$^3$, a specific surface area (BET value) of 0.43 m$^2$/g, a bulk density of 1.45 g/cm$^3$, and a particle size distribution of 0.52 was prepared.

A positive electrode mixture was obtained by mixing 70 parts by mass of the prepared positive electrode active material, 27 parts by mass of a solid electrolyte, and 3 parts by mass of VGCF (vapor grown carbon fiber).

[Assembly of battery for evaluation]

A column lower mold having an outer diameter of 11 mm was inserted into a cylindrical outer mold having an inner diameter of 11 mm from the lower part of the outer mold. The upper end of the lower mold was fixed at a position in the middle of the outer mold. In this state, 100 mg of the solid electrolyte was charged from the upper part of the outer mold to the upper end of the lower mold. After the solid electrolyte was charged, a column upper mold having an outer shape of 11 mm was inserted from the upper part of the outer mold. After the upper mold was inserted, a pressure of 100 MPa was applied from above the upper mold to form the solid electrolyte to make a solid electrolyte layer. After the molding, the upper mold was pulled out from the upper part of the outer mold, and 20 mg of the positive electrode mixture was charged into the upper part of the solid electrolyte layer from the upper part of the outer mold. After the charging, the upper mold was inserted again, and this time, a pressure of 100 MPa was applied to form a positive electrode mixture to make a positive electrode active material layer. After the molding, the upper mold was fixed, the fixing of the lower mold was released, the outer mold was pulled out from the lower part of the outer mold, and an LiAl alloy as a negative electrode active material was put into the lower part of the solid electrolyte layer from the lower part of the lower mold. After the charging, the lower mold was inserted again, and a pressure of 350 MPa was applied from below the lower mold to form a negative electrode active material to make a negative electrode active material layer. The lower mold was fixed in a state of applying pressure, and a positive electrode terminal was attached to the upper mold and a negative electrode terminal was attached to the lower mold, whereby an all-solid-state secondary battery for evaluation was obtained.

(Example 2)

An all-solid-state secondary battery for evaluation was produced in the same manner as in Example 1 except that a positive electrode active material having a primary particle size of 0.41 $\mu$m, a 50% particle size $D_{50}$ of 6.3 $\mu$m, a smoothness of 0.87, a degree of circularity of 0.91, a tap density of 2.55 g/cm$^3$, a specific surface area of 0.37 m$^2$/g, a bulk density of 1.67 g/cm$^3$, and a particle size distribution of 0.43 was used.

(Comparative Example 1)

An all-solid-state secondary battery for evaluation was produced in the same manner as in Example 1 except that a positive electrode active material having a primary particle size of 0.66 $\mu$m, a 50% particle size $D_{50}$ of 6.4 $\mu$m, a smoothness of 0.73, a degree of circularity of 0.83, a tap density of 2.09 g/cm$^3$, a specific surface area of 0.51 m$^2$/g, a bulk density of 1.07 g/cm$^3$, and a particle size distribution of 0.61 was used.

[Impedance measurement]

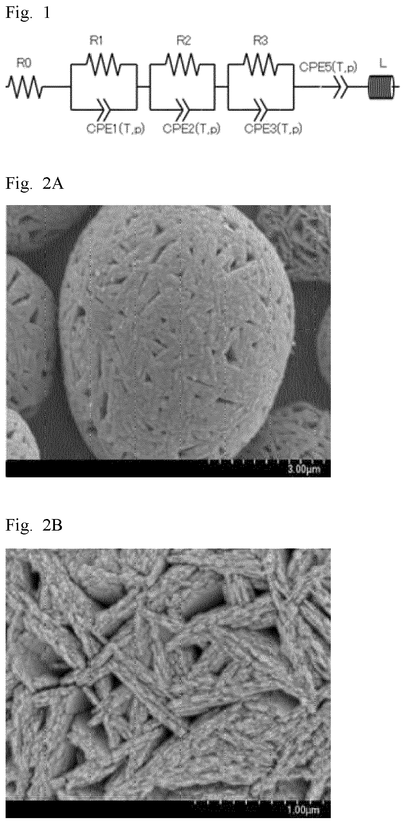

The all-solid-state secondary batteries for evaluation were charged and set to have a state of charge (SOC) of 50%. Each battery was connected to an AC power supply at 25°C, and resistance was measured by an AC impedance method. The frequency of the AC power source was changed logarithmically from 1 MHz to 0.1 Hz. The equivalent circuit was assumed as shown in Fig. 1, and the diameter of the arc appearing in the frequency range of from 1000 Hz to 5000 Hz by fitting by the least-square method was defined as a resistance derived from the positive electrode active material (resistance component in the impedance at the positive electrode/electrolyte interface). The results are shown in Table 1.

[Table 1]

| | $D_{10}$ | $D_{50}$ | $D_{90}$ | Specific surface area | Tap density | Bulk density | Smoothness | Degree of circularity | Primary particle size | Particle size distribution | Impedance |
|---|---|---|---|---|---|---|---|---|---|---|---|
| | μm | μm | μm | m²/g | g/cm³ | g/cm³ | - | - | μm | - | Ω |
| Example 1 | 4.5 | 6.0 | 7.7 | 0.43 | 2.48 | 1.45 | 0.84 | 0.88 | 0.42 | 0.52 | 41 |
| Example 2 | 5.1 | 6.3 | 7.8 | 0.37 | 2.55 | 1.67 | 0.87 | 0.91 | 0.41 | 0.43 | 35 |
| Comparative Example 1 | 4.7 | 6.4 | 8.6 | 0.51 | 2.09 | 1.07 | 0.73 | 0.83 | 0.66 | 0.61 | 44 |

As shown in Table 1, the measured values of impedance in Example 1 and Example 2 were greatly reduced as compared with Comparative Example 1. As described above, by making the smoothness of the secondary particles constituting the positive electrode active material more than 0.73 and making the degree of circularity more than 0.83, the internal resistance of the all-solid-state secondary battery may reduce.

(Example 3)

Preparation of each solution

A mixed solution (1.7 mol/L in combined concentration of nickel, cobalt and manganese; first solution) was prepared by mixing a solution of nickel sulfate, a solution of cobalt sulfate, and a solution of manganese sulfate so that the molar ratio of metal elements was 1 : 1 : 1. The total number of moles of metal elements in the mixed solution was set to 474 mol. As the basic aqueous solution, 25 mass% of an aqueous solution of sodium hydroxide was prepared. As the complex ion forming solution, 12.5 mass% of an aqueous solution of ammonia (second solution) was prepared. As the polymer solution, a blend of Aron A-30SL (manufactured by Toagosei Co., Ltd.; 40 mass% of an aqueous solution of ammonium polyacrylate, weight average molecular weight = 6000) and Aron A-210 (manufactured by Toagosei Co., Ltd.; 43 mass% of an aqueous solution of sodium polyacrylate, weight average molecular weight = 3000), which are surfactants, at a mass ratio of 1 : 1 was prepared.

Preparation of liquid medium

In a reaction vessel, 30 liters of water was prepared, and a solution of sodium hydroxide was added so as to have a pH of 12.5. Nitrogen gas was charged, and the inside of the reaction vessel was replaced with nitrogen to prepare a liquid medium.

Seed crystal formation step

While the liquid medium was stirred, the first solution was added in an amount of 2 mol as the total number of moles of metal elements to the liquid medium to precipitate a composite hydroxide containing nickel, cobalt and manganese.

Crystallization step

While the prepared liquid medium containing the composite hydroxide was stirred, 472 mol of the remaining first solution, an aqueous solution of sodium hydroxide, and the aqueous solution of ammonia (second solution) were separately and simultaneously supplied while basicity was maintained (pH 11.3). The supply of the polymer solution was started 3 hours after the supply of the first solution, the second solution, and the aqueous sodium hydroxide solution was started, and a composite hydroxide containing nickel, cobalt and manganese was precipitated. The supply amount of the polymer solution was a supply amount that was 1 mass% as the supply amount of the polymer based on the theoretical yield of the produced composite hydroxide. The first solution was continuously supplied over 18 hours. In the crystallization step, the temperature of the liquid medium was controlled to be about 50°C.

The precipitate was collected, and subsequently washed with water, filtered, and dried to obtain a composite hydroxide containing nickel, cobalt and manganese (hereinafter, also referred to as nickel cobalt composite hydroxide).

Production of nickel cobalt composite oxide

The nickel cobalt composite hydroxide was subjected to a heat treatment at 320°C for 16 hours in an air atmosphere, and collected as a transition metal composite oxide containing nickel, cobalt and manganese (hereinafter, also referred to as nickel cobalt composite oxide).

The obtained nickel cobalt transition metal composite oxide was dissolved in an inorganic acid, and then chemical analysis was performed by ICP emission spectroscopy. The composition was $Ni_{0.338}CO_{0.331}Mn_{0.331}O_2$. The physical properties of the obtained nickel cobalt composite oxide were measured in the same manner as described above. The 50% particle diameter $D_{50}$ was 5.8 $\mu$m, the degree of circularity was 0.91, and the smoothness was 0.80.

(Example 4)

The procedures were performed under the same conditions as in Example 3 except that the amount of the first solution supplied in the seed crystal formation step was increased from that in Example 1 and accordingly the amount of the first solution supplied in the crystallization step was decreased from that in Example 1, and the supply amount of the polymer solution was changed so that the supply amount of the polymer was 1.4 mass% based on the theoretical yield of the produced composite hydroxide.

The obtained nickel cobalt composite oxide was dissolved in an inorganic acid, and then chemical analysis was performed by ICP emission spectroscopy. The composition was $Ni_{0.335}Co_{0.333}Mn_{0.332}O_2$. The obtained nickel cobalt composite oxide had a 50% particle diameter $D_{50}$ of 3.5 $\mu$m, a degree of circularity of 0.85, and a smoothness of 0.84.

(Example 5)

The procedures were performed under the same conditions as in Example 3 except that the amount of the first solution supplied in the seed crystal formation step was reduced from that in Example 3 and accordingly the amount of the first solution supplied in the crystallization step was increased from that in Example 1.

The obtained nickel cobalt composite oxide was dissolved in an inorganic acid, and then chemical analysis was performed by ICP emission spectroscopy. The composition was $Ni_{0.335}Co_{0.333}Mn_{0.332}O_2$. The obtained nickel cobalt composite oxide had a 50% particle diameter $D_{50}$ of 7.9 $\mu$m, a degree of circularity of 0.85 and a smoothness of 0.89.

(Example 6)

The procedures were performed under the same conditions as in Example 3 except that the supply amount of the polymer solution was changed so that the supply amount of the polymer was 2 mass% based on the theoretical yield of the produced composite hydroxide.

The obtained nickel cobalt composite oxide was dissolved in an inorganic acid, and then chemical analysis was performed by ICP emission spectroscopy. The composition was $Ni_{0.339}Co_{0.331}Mn_{0.330}O_2$. The obtained nickel cobalt composite oxide had a 50% particle diameter $D_{50}$ of 6.1 $\mu$m, a degree of circularity of 0.89 and a smoothness of 0.91.

(Example 7)

The procedures were performed under the same conditions as in Example 3 except that the polymer solution was changed to FLOSPERSE 5000 (manufactured by SNF; 44% aqueous solution of sodium polyacrylate, weight average molecular weight = 6500 to 10,000) which is a surfactant.

The obtained nickel cobalt composite oxide was dissolved in an inorganic acid, and then chemical analysis was performed by ICP emission spectroscopy. The composition was $Ni_{0.340}Co_{0.333}Mn_{0.328}O_2$. The obtained nickel cobalt composite oxide had a 50% particle diameter $D_{50}$ of 5.9 $\mu$m, a degree of circularity of 0.87 and a smoothness of 0.89.

(Example 8)

The procedures were performed under the same conditions as in Example 3 except that the polymer solution was changed to FLOSPERSE 9000 (manufactured by SNF; 40% aqueous solution of sodium polyacrylate, weight average molecular weight = 10,000 to 17000) which is a surfactant.

The obtained nickel cobalt composite oxide was dissolved in an inorganic acid, and then chemical analysis was performed by ICP emission spectroscopy. The composition was $Ni_{0.338}Co_{0.333}Mn_{0.330}O_2$. The obtained nickel cobalt composite oxide had a 50% particle diameter $D_{50}$ of 5.3 $\mu$m, a degree of circularity of 0.88 and a smoothness of 0.85.

(Example 9)

The procedures were performed under the same conditions as in Example 3 except that the polymer solution was changed to FLOSPERSE 10000 (manufactured by SNF; 30% aqueous solution of sodium polyacrylate, weight average molecular weight = 50,000 to 70,000) which is a surfactant.

The obtained nickel cobalt composite oxide was dissolved in an inorganic acid, and then chemical analysis was performed by ICP emission spectroscopy. The composition was $Ni_{0.341}Co_{0.331}Mn_{0.328}O_2$. The obtained nickel cobalt composite oxide had a 50% particle diameter $D_{50}$ of 8.0 $\mu$m, a degree of circularity of 0.87 and a smoothness of 0.88.

(Example 10)

The procedures were performed under the same conditions as in Example 3 except that the polymer solution was changed to FLOSPERSE 15000 (manufactured by SNF; 30% aqueous solution of sodium polyacrylate, weight average molecular weight = 100,000 to 170,000) which is a surfactant.

The obtained nickel cobalt composite oxide was dissolved in an inorganic acid, and then chemical analysis was performed by ICP emission spectroscopy. The composition was $Ni_{0.339}Co_{0.331}Mn_{0.329}O_2$. The obtained nickel cobalt composite oxide had a 50% particle diameter $D_{50}$ of 8.5 μm, a degree of circularity of 0.87 and a smoothness of 0.85.

(Example 11)

The procedures were performed under the same conditions as in Example 3 except that the molar ratio of nickel, cobalt and manganese in the first solution was changed to 9.2 : 0.4 : 0.4.
The obtained nickel cobalt composite oxide was dissolved in an inorganic acid, and then chemical analysis was performed by ICP emission spectroscopy. The composition was $Ni_{0.921}Co_{0.040}Mn_{0.039}O_2$. The obtained nickel cobalt composite oxide had a 50% particle diameter $D_{50}$ of 5.8 μm, a degree of circularity of 0.89 and a smoothness of 0.76.

(Comparative Example 2)

The procedures were performed under the same conditions as in Example 3 except that the polymer solution was not supplied.
The obtained nickel cobalt composite oxide was dissolved in an inorganic acid, and then chemical analysis was performed by ICP emission spectroscopy. The composition was $Ni_{0.340}Co_{0.330}Mn_{0.329}O_2$. The obtained nickel cobalt composite oxide had a 50% particle diameter $D_{50}$ of 6.2 μm, a degree of circularity of 0.86 and a smoothness of 0.56.

(Comparative Example 3)

The procedures were performed under the same conditions as in Example 11 except that the polymer solution was not supplied.
The obtained nickel cobalt composite oxide was dissolved in an inorganic acid, and then chemical analysis was performed by ICP emission spectroscopy. The composition was $Ni_{0.920}Co_{0.040}Mn_{0.040}O_2$. The obtained nickel cobalt composite oxide had a 50% particle diameter $D_{50}$ of 5.8 μm, a degree of circularity of 0.86 and a smoothness of 0.67.

(Comparative Example 4)

The procedures were performed under the same conditions as in Example 3 except that 40 mass% of a solution of citric acid was supplied instead of the polymer solution.
The obtained nickel cobalt composite oxide was dissolved in an inorganic acid, and then chemical analysis was performed by ICP emission spectroscopy. The composition was $Ni_{0.336}Co_{0.333}Mn_{0.331}O_2$. The obtained nickel cobalt composite oxide had a 50% particle diameter $D_{50}$ of 6.5 μm, a degree of circularity of 0.88 and a smoothness of 0.45.

(Comparative Example 5)

The procedures were performed under the same conditions as in Example 4 except that the polymer solution was not supplied.
The obtained nickel cobalt composite oxide was dissolved in an inorganic acid, and then chemical analysis was performed by ICP emission spectroscopy. The composition was $Ni_{0.335}Co_{0.334}Mn_{0.331}O_2$. The obtained nickel cobalt composite oxide had a 50% particle diameter $D_{50}$ of 3.2 μm, a degree of circularity of 0.83 and a smoothness of 0.58.

(Comparative Example 6)

The procedures were performed under the same conditions as in Example 5 except that the polymer solution was not supplied.
The obtained nickel cobalt composite oxide was dissolved in an inorganic acid, and then chemical analysis was performed by ICP emission spectroscopy. The composition was $Ni_{0.328}Co_{0.338}Mn_{0.335}O_2$. The obtained nickel cobalt composite oxide had a 50% particle diameter $D_{50}$ of 8.2 μm, a degree of circularity of 0.82 and a smoothness of 0.74.

[Table 2]

| | Polymer | $D_{50}$ | Tap density | Smoothness | Degree of circularity |
|---|---|---|---|---|---|
| | | μm | g/cm$^3$ | - | - |
| Example 3 | Aron A blend | 5.8 | 1.98 | 0.80 | 0.91 |
| Comparative Example 2 | - | 6.2 | 1.76 | 0.56 | 0.86 |

(continued)

| | Polymer | $D_{50}$ | Tap density | Smoothness | Degree of circularity |
|---|---|---|---|---|---|
| | | μm | g/cm$^3$ | - | - |
| Example 4 | Aron A blend | 3.5 | 1.72 | 0.84 | 0.85 |
| Comparative Example 5 | - | 3.2 | 1.16 | 0.58 | 0.83 |
| Example 5 | Aron A blend | 7.9 | 2.06 | 0.89 | 0.85 |
| Comparative Example 6 | - | 8.2 | 1.74 | 0.74 | 0.82 |
| Example 6 | Aron A blend | 6.1 | 2.01 | 0.91 | 0.89 |
| Example 7 | FLOSPERSE 5000 | 5.9 | 2.05 | 0.89 | 0.87 |
| Example 8 | FLOSPERSE 9000 | 5.3 | 1.91 | 0.85 | 0.88 |
| Example 9 | FLOSPERSE 10000 | 8.0 | 2.16 | 0.88 | 0.87 |
| Example 10 | FLOSPERSE 15000 | 8.5 | 2.09 | 0.85 | 0.87 |
| Example 11 | Aron A blend | 5.8 | 2.01 | 0.76 | 0.89 |
| Comparative Example 3 | - | 5.8 | 1.39 | 0.67 | 0.86 |
| Comparative Example 4 | (Citric acid) | 6.5 | 1.42 | 0.45 | 0.88 |

(Example 12)

A lithium mixture was obtained by dry-mixing both the nickel cobalt composite oxide obtained in Example 3 and lithium carbonate such that the molar ratio of the lithium carbonate to the nickel cobalt composite oxide was 1.15 times. The obtained lithium mixture was heat-treated at 890°C for 10 hours in an air atmosphere. Thereafter, dispersion treatment was performed to obtain a lithium transition metal composite oxide. $Nb_2O_5$ sol manufactured by Taki Chemical Co., Ltd. with a concentration of 4.2 mass% was used as a niobium source based on 900 g of the obtained lithium transition metal composite oxide, and 136g of the sol was dripped while the lithium transition metal composite oxide was stirred with a mixer to obtain a niobium attached matter. Thereafter, heat treatment was performed at 350°C for 9 hours in the air. The obtained heat-treated product was subjected to a dispersion treatment with a ball mill made of resin so as to have the same volume average particle diameter as that of the base material after the synthesis step, and the resultant product was dry-sieved to obtain a positive electrode active material as a lithium transition metal composite oxide subjected to an Nb treatment.

The obtained lithium transition metal composite oxide was dissolved in an inorganic acid, and then subjected to chemical analysis by ICP emission spectroscopy. The composition was $Li_{1.15}Ni_{0.338}Co_{0.331}Mn_{0.331}O_2$. The evaluation results are shown in Table 3.

(Example 13)

A lithium transition metal composite oxide was obtained in the same manner as in Example 13 except that the nickel cobalt composite oxide obtained in Example 4 was used.

The obtained lithium transition metal composite oxide was dissolved in an inorganic acid, and then subjected to chemical analysis by ICP emission spectroscopy. The composition was $Li_{1.15}Ni_{0.335}Co_{0.333}Mn_{0.332}O_2$. The evaluation results are shown in Table 3.

(Comparative Example 7)

A lithium transition metal composite oxide was obtained in the same manner as in Example 12 except that the nickel cobalt composite oxide obtained in Comparative Example 5 was used.

The obtained lithium transition metal composite oxide was dissolved in an inorganic acid, and then subjected to chemical analysis by ICP emission spectroscopy. The composition was $Li_{1.15}Ni_{0.335}Co_{0.334}Mn_{0.331}O_2$. The evaluation results are shown in Table 3.

(Example 14)

A lithium transition metal composite oxide was obtained in the same manner as in Example 12 except that the nickel cobalt composite oxide obtained in Example 5 was used.

The obtained lithium transition metal composite oxide was dissolved in an inorganic acid, and then subjected to chemical analysis by ICP emission spectroscopy. The composition was $Li_{1.15}Ni_{0.335}Co_{0.333}Mn_{0.332}O_2$. The evaluation results are shown in Table 3.

(Comparative Example 8)

A lithium transition metal composite oxide was obtained in the same manner as in Example 12 except that the nickel cobalt composite oxide obtained in Comparative Example 6 was used.

The obtained lithium transition metal composite oxide was dissolved in an inorganic acid, and then subjected to chemical analysis by ICP emission spectroscopy. The composition was $Li_{1.15}Ni_{0.335}Co_{0.334}Mn_{0.331}O_2$. The impedance was measured in the same manner as in Example 1 except that a crystalline solid electrolyte further containing chlorine was used as the composition. When the impedance value of Comparative Example 1 obtained by this method was 1, a relative value was calculated as a relative impedance. The evaluation results are shown in Table 3.

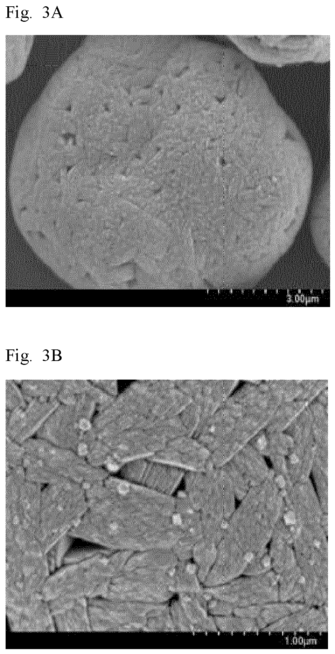

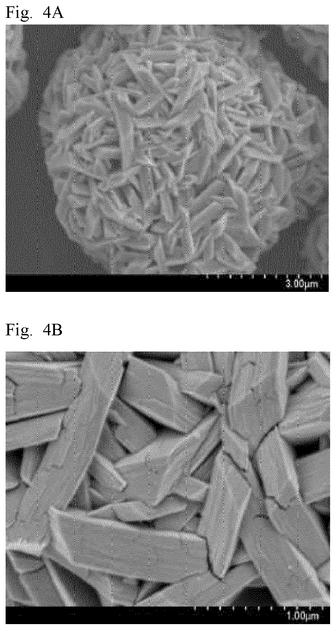

The nickel cobalt composite oxide particles obtained in Example 3, Example 7, and Comparative Example 2 were observed with the above-described scanning electron microscope (Hitachi High-Technologies SU8230) at an acceleration voltage of 1.5 kV. Figs. 2A and 2B are examples of SEM images obtained by observing the nickel cobalt composite oxide particle obtained in Example 3. Figs. 3A and 3B are examples of SEM images obtained by observing the nickel cobalt composite oxide particles obtained in Example 7. Figs. 4A and 4B are examples of SEM images obtained by observing the nickel cobalt composite oxide particles obtained in Comparative Example 2. Figs. 2A, 3A, and 4A are SEM images observed at a magnification of 15000 times, and Figs. 2B, 3B, and 4B are SEM images observed at a magnification of 50,000 times. As shown in Figs. 2B, 3B, and 4B, it is found that in Example 3 prepared using the polymer solution, the growth of primary particles is suppressed and dense secondary particles are formed, as compared with Comparative Example 2 in which the polymer solution was not used.

[Table 3]

| | $D_{10}$ | $D_{50}$ | $D_{90}$ | Specific surface area | Tap density | Bulk density | Smoothness | Degree of circularity | Primary particle size | Particle size distribution | Relative impedance |
|---|---|---|---|---|---|---|---|---|---|---|---|
| | μm | μm | μm | m²/g | g/cm³ | g/cm³ | - | - | mm | - | - |
| Example 12 | 4.5 | 5.9 | 7.6 | 0.44 | 2.55 | 1.53 | 0.85 | 0.86 | 0.45 | 0.53 | 0.71 |
| Comparative Example 1 | 4.7 | 6.4 | 8.6 | 0.51 | 2.09 | 1.07 | 0.73 | 0.83 | 0.66 | 0.61 | 1.00 |
| Example 13 | 2.8 | 3.7 | 4.9 | 0.94 | 2.01 | 0.90 | 0.80 | 0.87 | 0.36 | 0.59 | 0.87 |
| Comparative Example 7 | 2.3 | 3.1 | 4.5 | 1.78 | 1.39 | 0.53 | 0.72 | 0.73 | 0.40 | 0.70 | 1.32 |
| Example 14 | 6.4 | 7.9 | 9.5 | 0.31 | 2.49 | 1.64 | 0.83 | 0.88 | 0.58 | 0.39 | 0.88 |
| Comparative Example 8 | 6.6 | 8.2 | 10.0 | 0.38 | 2.23 | 1.36 | 0.70 | 0.80 | 0.56 | 0.61 | 1.19 |

As shown in Table 3, in the obtained Examples, it was confirmed that both the smoothness and the degree of circularity were improved as compared with Comparative Examples, and reduction in resistance was confirmed. The ratio of the relative impedance of Example 12 to Comparative Example 1 was smaller than the ratio of the relative impedance of Example 14 to Comparative Example 8, and the ratio of the relative impedance of Example 13 to Comparative Example 7 was smaller than the ratio of the relative impedance of Example 12 to Comparative Example 1. That is, it was confirmed that the smaller the particle diameter was, the larger the effect of improving the relative impedance.

The disclosure of Japanese Patent Application No. 2019-141366 (filing date: July 31, 2019) is incorporated herein by reference in its entirety. All documents, patent applications, and technical standards described in this specification are incorporated herein by reference to the same extent as if individual documents, patent applications, and technical standards were specifically and individually indicated to be incorporated by reference.

**Claims**

1. A method for producing a nickel cobalt composite oxide comprising:

   preparing a first solution containing nickel ions and cobalt ions;
   preparing a second solution containing a complex ion forming factor;
   preparing a liquid medium having a pH in a range of from 10 to 13.5;
   supplying the first solution and the second solution separately and simultaneously to the liquid medium, and supplying a polymer containing a constituent unit derived from (meth)acrylic acid to the liquid medium, to obtain a reaction solution whose pH is maintained in a range of from 10 to 13.5;
   obtaining a composite hydroxide containing nickel and cobalt from the reaction solution; and
   subjecting the composite hydroxide to a heat treatment to obtain secondary particles comprising an aggregate of a plurality of primary particles containing a composite oxide containing nickel and cobalt,
   wherein a smoothness of the secondary particles is more than 0.74.

2. The method according to claim 1, wherein the reaction solution is obtained by a method including, in this order:

   supplying the first solution and the second solution separately and simultaneously to the liquid medium; and
   supplying the polymer to the liquid medium separately from and simultaneously with the first solution and the second solution, or supplying the polymer to the liquid medium together with at least one of the first solution and the second solution.

3. The method according to claim 1 or 2, wherein the liquid medium contains a composite hydroxide containing nickel and cobalt.

4. The method according to any one of claims 1 to 3, wherein a nickel ion concentration in the reaction solution is maintained in a range of from 10 ppm to 1000 ppm.

5. The method according to any one of claims 1 to 4, wherein a time for supplying the first solution is from 6 hours to 60 hours.

6. A nickel cobalt composite oxide comprising secondary particles comprising an aggregate of a plurality of primary particles containing a composite oxide containing nickel and cobalt,
   wherein a smoothness of the secondary particles is more than 0.74.

7. The nickel cobalt composite oxide according to claim 6, having a composition in which a ratio of a number of moles of nickel to a total number of moles of metal elements is more than 0 and less than 1, and
   a ratio of a number of moles of cobalt to the total number of moles of the metal elements is more than 0 and no more than 0.6.

8. The nickel cobalt composite oxide according to claim 6 or 7, having a composition represented by Formula (1) shown below:

$$Ni_qCo_rM^1{}_sM^2{}_tO_{2+\alpha} \qquad (1)$$

wherein $M^1$ represents at least one of Mn and Al, $M^2$ represents at least one selected from the group consisting of Ca, Zr, Ti, Mg, Ta, Nb, Cr, Mo, W, Fe, Cu, Si, Sn, Bi, Ga, Y, Sm, Er, Ce, Nd, La, Cd and Lu, and q, r, s, t and $\alpha$ satisfy $0 < q < 1$, $0 < r \le 0.6$, $0 \le s \le 0.6$, $0 \le t \le 0.02$, $-0.1 \le \alpha \le 1.1$ and $q + r + s + t = 1$.

9. A positive electrode active material having a layered structure and comprising secondary particles comprising an aggregate of a plurality of primary particles containing a lithium transition metal composite oxide containing lithium, nickel and cobalt,
   wherein a smoothness of the secondary particles is more than 0.73, and a degree of circularity of the secondary particles is more than 0.83.

10. The positive electrode active material according to claim 9, wherein a volume average particle diameter of the secondary particles is from 1 $\mu$m to 30 $\mu$m.

11. The positive electrode active material according to claim 9 or 10, wherein a value obtained by dividing a difference between a 90% particle diameter $D_{90}$ and a 10% particle diameter $D_{10}$ in a volume-based cumulative particle size distribution by a 50% particle diameter $D_{50}$ is no more than 0.6.

12. The positive electrode active material according to any one of claims 9 to 11, wherein the lithium transition metal composite oxide has a composition in which a ratio of a number of moles of nickel to a total number of moles of metal elements other than lithium of more than 0 and less than 1, and a ratio of a number of moles of cobalt to the total number of moles of the metal elements other than lithium is more than 0 and no more than 0.6.

13. The positive electrode active material according to any one of claims 9 to 12, wherein the lithium transition metal composite oxide has a composition represented by Formula (2) shown below:

$$Li_pNi_xCo_yM^1{}_zM^2{}_wO_{2+\beta} \qquad (2)$$

wherein p, x, y, z, w and $\beta$ satisfy $1.0 \le p \le 1.3$, $0 < x < 1$, $0 < y \le 0.6$, $0 \le z \le 0.6$, $0 \le w \le 0.02$, $x + y + z + w = 1$ and $-0.1 \le \beta \le 0.1$, $M^1$ represents at least one of Mn and Al, and $M^2$ represents at least one selected from the group consisting of Ca, Zr, Ti, Mg, Ta, Nb, Cr, Mo, W, Fe, Cu, Si, Sn, Bi, Ga, Y, Sm, Er, Ce, Nd, La, Cd and Lu.

14. The positive electrode active material according to any one of claims 9 to 13, wherein the secondary particles have an attached matter containing niobium on their surfaces.

15. A positive electrode for an all-solid-state lithium ion secondary battery, comprising a positive electrode active material,

    wherein the positive electrode active material contains secondary particles comprising an aggregate of a plurality of primary particles containing a lithium transition metal composite oxide,
    a smoothness of the secondary particles is more than 0.73, and
    a degree of circularity of the secondary particles is more than 0.83.

16. The positive electrode according to claim 15, wherein a volume average particle diameter of the secondary particles is from 1 $\mu$m to 30 $\mu$m.

17. The positive electrode according to claim 15 or 16, wherein the secondary particles have an attached matter containing niobium on their surfaces.

18. An all-solid-state lithium ion secondary battery comprising the positive electrode according to any one of claims 15 to 17, a negative electrode and a solid electrolyte layer.

Fig. 1

Fig. 2A

Fig. 2B

Fig. 3A

Fig. 3B

Fig. 4A

Fig. 4B

<div align="center">

**INTERNATIONAL SEARCH REPORT**

</div>

| | International application No. |
|---|---|
| | PCT/JP2020/029327 |

**A. CLASSIFICATION OF SUBJECT MATTER**
Int. Cl. H01M4/525(2010.01)i, C01G53/00(2006.01)i, H01M4/36(2006.01)i, H01M4/505(2010.01)i, H01M4/62(2006.01)i, H01M10/052(2010.01)i, H01M10/0562(2010.01)i
FI: H01M4/525, H01M4/505, H01M10/0562, H01M4/62 Z, H01M4/36 A, H01M10/052, C01G53/00 A

According to International Patent Classification (IPC) or to both national classification and IPC

**B. FIELDS SEARCHED**

Minimum documentation searched (classification system followed by classification symbols)
Int. Cl. H01M4/525, C01C53/00, H01M4/36, H01M4/505, H01M4/62, H01M10/052, H01M10/0562

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-147689 A (ASAHI GLASS CO., LTD.) 20 August 2015 | 1-18 |
| A | JP 2016-210674 A (NICHIA CHEMICAL INDUSTRIES, LTD.) 15 December 2016 | 1-18 |
| A | WO 2012/096059 A1 (MURATA MFG. CO., LTD.) 19 July 2012 | 1-18 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10.09.2020 | 24.09.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/029327

| Patent Documents referred to in the Report | Publication Date | Patent Family | Publication Date |
|---|---|---|---|
| JP 2015-147689 A | 20.08.2015 | (Family: none) | |
| JP 2016-210674 A | 15.12.2016 | US 2016/0322627 A1<br>EP 3100981 A1<br>KR 10-2016-0128238 A<br>CN 106099051 A | |
| WO 2012/096059 A1 | 19.07.2012 | US 2013/0295441 A1<br>EP 2665110 A1<br>CN 103299452 A | |

Form PCT/ISA/210 (patent family annex) (January 2015)

**REFERENCES CITED IN THE DESCRIPTION**

**Patent documents cited in the description**

- WO 2007004590 A
- WO 2013183711 A
- WO 2016180288 A
- JP 2002075367 A
- JP 2011146390 A
- JP 2006012433 A
- JP 2019141366 A